# EUROPEAN PATENT APPLICATION

(11) **EP 4 769 986 A1**
(43) Date of publication of application: **01.07.2026**
(21) Application number: 24864494.0
(22) Date of filing: 02.09.2024
(51) Int. Cl.: H04L 1/00

(54) **DATA PROCESSING METHOD AND APPARATUS**

(30) Priority: 14.09.2023 CN 202311196272
(71) Applicant: Huawei Technologies Co., Ltd., Shenzhen, Guangdong 518129 (CN)
(72) Inventor: QIU, Xianwen, Shenzhen, Guangdong 518129 (CN)
(74) Representative: Körber, Martin Hans
(86) International application number: PCT/CN2024/116390
(87) International publication number: WO 2025/055772

(57) **Abstract**

Embodiments of this application provide a data processing method and an apparatus, and relate to the field of data communication technologies. First physical PHY of a sending device receives first indication information from a first medium access control MAC layer of the sending device, where the first indication information indicates the sending device to send a service flow to a receiving device. The first PHY obtains a first indication code block based on the first indication information, where the first indication code block indicates a second PHY of the receiving device to be switched from a sleep state to an operating state, and indicates a second serializer/deserializer SerDes corresponding to the second PHY to be switched from a keepalive state to an operating state. The first PHY sends the first indication code block to the receiving device. In this manner, it can be ensured that an operating state is recovered more quickly when power consumption at a physical layer of the Ethernet is reduced, to further improve user experience.

## Description

### CROSS-REFERENCE TO RELATED APPLICATIONS

This application claims priority to Chinese Patent Application No. 202311196272.9, filed with the China National Intellectual Property Administration on September 14, 2023 and entitled "DATA PROCESSING METHOD AND APPARATUS", which is incorporated herein by reference in its entirety.

### TECHNICAL FIELD

Embodiments of this application relate to the field of data communication technologies, and in particular, to a data processing method and an apparatus.

### BACKGROUND

With expansion of Ethernet capacity requirements, a service has increasingly high requirements on a rate of an Ethernet link. In addition, Ethernet service bandwidth is in rapid development. With the increase of the service bandwidth and the increase of bit errors on a physical link, a physical layer needs a more complex structure to support the development of service requirements. For example, forward error correction (forward error correction, FEC) increases power consumption at the physical layer.

To reduce the power consumption at the physical layer (physical layer, PHY), a manner of sleeping a serializer/deserializer (serializer/deserializer, SerDes) is proposed in a conventional technology to reduce the power consumption at the physical layer. In a current processing mechanism, long recovery time is needed for switching the SerDes from a sleep state to an operating state, and specifically, the needed time is longer than dozens of milliseconds (millisecond, ms). In this manner, dozens of milliseconds or more are needed to buffer transmitted service data, and service data to be subsequently sent needs to be delayed by dozens of milliseconds for sending. This greatly affects delay experience of an Ethernet user, causing poor user experience.

### SUMMARY

This application provides a data processing method and an apparatus, to effectively shorten time for a SerDes to recover an operating state, reduce buffering of service data, and improve user experience when reducing power consumption at a physical layer of the Ethernet.

According to a first aspect, this application provides a data processing method, applied to a sending device. The sending device includes a first medium access control (medium access control, MAC) layer and a first physical layer (physical layer, PHY). The sending device may be a device in Ethernet or super Ethernet, for example, a switch or a router. This is not specifically limited herein. The method is performed as follows:

The first PHY receives first indication information from the first MAC layer, where the first indication information indicates the sending device to send a service flow to a receiving device. The first PHY obtains a first indication code block based on the first indication information, where the first indication code block indicates a second PHY of the receiving device to be switched from a sleep state to an operating state, and indicates a second SerDes corresponding to the second PHY to be switched from a keepalive state to an operating state. The first PHY sends the first indication code block to the receiving device.

It should be noted that, that the first PHY obtains the first indication code block based on the first indication information may be understood as that the first PHY generates the first indication code block based on the first indication information, or the first PHY selects, based on the first indication information, an indication code block from pre-generated indication code blocks as the first indication code block. Details of how to obtain the first indication code block are not specifically limited in this application. In addition, in this application, the sleep state may be understood as a non-operating state, a state in which no service is processed, or a state in which transmission of a service flow is not performed, the operating state may be understood as a state in which transmission of a service flow is performed or a state in which a service is processed, and the keepalive state may be understood as a standby state. Once a service-related trigger message or instruction is received, the operating state is immediately recovered.

In this application, after receiving the first indication information from the MAC layer, the PHY of the sending device determines, based on the first indication information, that transmission of the service flow needs to be recovered, obtains the first indication code block based on the first indication information, and indicates the first indication code block to the receiving device, so that the receiving device performs state switching on the PHY based on the first indication code block, the PHY of the receiving device is switched from the sleep state to the operating state, and the SerDes corresponding to the PHY is switched from the keepalive state to the operating state. In this manner, when an Ethernet device does not operate, the PHY is in the sleep state, and the SerDes corresponding to the PHY is in the keepalive state, so that power consumption at the physical layer can be saved. Once a service is recovered, the Ethernet device may respond in a timely manner, the PHY is switched from the sleep state to the operating state, and the SerDes is switched from the keepalive state to the operating state. When service recovery is performed, the response is fast, and there is no need to buffer a large amount of service data during service recovery to wait for the Ethernet device recovers to operate. This can improve user experience, and improve data processing efficiency.

In an optional manner, the first PHY switches, based on the first indication information, the first PHY from a sleep state to an operating state, and a first SerDes corresponding to the first PHY from a keepalive state to an operating state.

It should be noted that, the first PHY may directly adjust, based on the first indication information, the operating state of the first PHY and the operating state of the first SerDes corresponding to the first PHY; or may obtain the first indication code block based on the first indication information, and adjust, based on the first indication code block, the operating state of the first PHY and the operating state of the first SerDes corresponding to the first PHY. This is not specifically limited in this application.

In this application, when recovering to operate, the first PHY switches, based on the first indication information, the first PHY from the sleep state to the operating state, and the first SerDes corresponding to the first PHY from the keepalive state to the operating state, so that quick response to service recovery can be ensured, and user experience can be improved.

In an optional manner, the first PHY includes a first physical coding sublayer (physical coding sublayer, PCS) and a first physical medium attachment (physical medium attachment, PMA), and that the first PHY is switched from the sleep state to the operating state includes: The first PCS is switched from a sleep state to an operating state, and the first PMA is switched from a sleep state to an operating state.

In this application, that the first PHY is switched from the sleep state to the operating state includes: The first PCS is switched from the sleep state to the operating state, and the first PMA is switched from the sleep state to the operating state. This can ensure quick response to service recovery, and improve user experience.

In an optional manner, the first PHY receives second indication information from the first MAC layer, where the second indication information indicates the sending device to stop sending a service flow to a receiving device. The first PHY obtains a second indication code block based on the second indication information, where the second indication code block indicates the second PHY of the receiving device to be switched from the operating state to the sleep state, and indicates the second SerDes corresponding to the second PHY to be switched from the operating state to the keepalive state. The first PHY sends the second indication code block to the receiving device.

It should be noted that, that the first PHY obtains the second indication code block based on the second indication information may be understood as that the first PHY generates the second indication code block based on the second indication information, or the first PHY selects, based on the second indication information, an indication code block from pre-generated indication code blocks as the second indication code block. Details of how to obtain the second indication code block are not specifically limited in this application.

In this application, after receiving second indication information from a MAC layer, a PHY of the sending device determines, based on the second indication information, that transmission of a service flow needs to be stopped, obtains a second indication code block based on the second indication information, and indicates the second indication code block to the receiving device, so that the receiving device performs state switching on a PHY based on the second indication code block, the PHY of the receiving device is switched from an operating state to a sleep state, and a SerDes corresponding to the PHY is switched from an operating state to a keepalive state. In this manner, when the Ethernet device does not operate, the PHY is in the sleep state, and the SerDes corresponding to the PHY is in the keepalive state, so that power consumption at the physical layer can be saved.

In an optional manner, the first PHY switches, based on the second indication information, the first PHY from the operating state to the sleep state, and the first SerDes corresponding to the first PHY from the operating state to the keepalive state.

It should be noted that, the first PHY may directly adjust, based on the second indication information, the operating state of the first PHY and the operating state of the first SerDes corresponding to the first PHY; or may obtain the second indication code block based on the second indication information, and adjust, based on the second indication code block, the operating state of the first PHY and the operating state of the first SerDes corresponding to the first PHY. This is not specifically limited in this application.

In this application, when stopping operating, the first PHY switches, based on the second indication information, the first PHY from the operating state to the sleep state, and the first SerDes corresponding to the first PHY from the operating state to the keepalive state, so that quick response to service recovery can be ensured, and power consumption can be reduced.

In an optional manner, the first PHY includes the first PCS and the first PMA, and that the first PHY is switched from the operating state to the sleep state includes: The first PCS is switched from the operating state to the sleep state, and the first PMA is switched from the operating state to the sleep state.

In this application, that the first PHY is switched from the operating state to the sleep state includes: The first PCS is switched from the operating state to the sleep state, and the first PMA is switched from the operating state to the sleep state. This can ensure quick response to service stop, and reduce power consumption.

In an optional manner, the first PCS switches, based on the first indication information, the first PCS from the sleep state to the operating state, and obtains the first indication code block; the first PCS sends the first indication code block to the first PMA; and the first PMA switches the first PMA from the sleep state to the operating state based on the received first indication code block.

In an optional manner, the first PCS switches the first PCS from the sleep state to the operating state based on the first indication information, and sends the first indication information to the first PMA; and the first PMA switches, based on the received first indication information, the first PMA from the sleep state to the operating state, and obtains the first indication code block.

In this application, when the first PCS switches the first PCS from the sleep state to the operating state based on the first indication information, the first indication information may be transparently transmitted to the first PMA; or the first indication code block may be obtained, and the first indication code block is transmitted to the first PMA, so that the first PMA performs state switching. Regardless of which manner is used, it can be ensured that both the first PCS and the first PMA are switched from the sleep state to the operating state, to ensure quick service recovery and improve data processing efficiency.

In an optional manner, the first PCS switches, based on the second indication information, the first PCS from the operating state to the sleep state, and obtains the second indication code block; the first PCS sends the second indication code block to the first PMA; and the first PMA switches the first PMA from the operating state to the sleep state based on the received second indication code block.

In an optional manner, the first PCS switches the first PCS from the operating state to the sleep state based on the second indication information, and sends the second indication information to the first PMA; and the first PMA switches, based on the received second indication information, the first PMA from the operating state to the sleep state, and obtains the second indication code block.

In this application, when the first PCS switches the first PCS from the operating state to the sleep state based on the second indication information, the second indication information may be transparently transmitted to the first PMA; or the second indication code block may be obtained, and the second indication code block is transmitted to the first PMA, so that the first PMA performs state switching. Regardless of which manner is used, it can be ensured that both the first PCS and the first PMA are switched from the operating state to the sleep state, to ensure quick service stop and improve data processing efficiency.

In an optional manner, the first PCS includes a plurality of first PCS lanes, and the first PCS switches the plurality of first PCS lanes from a sleep state to an operating state; or the first PCS switches a part of the plurality of first PCS lanes from a sleep state to an operating state based on a first service flow rate threshold.

In this application, during service recovery, the some or all of the first PCS lanes may be switched from the sleep state to the operating state based on an actual service traffic requirement. In this manner, power consumption at the physical layer can be further reduced when normal service transmission is ensured.

In an optional manner, the first PCS includes a plurality of first PCS lanes, and the first PCS switches the plurality of first PCS lanes from an operating state to a sleep state; or the first PCS switches a part of the plurality of first PCS lanes from an operating state to a sleep state based on a second service flow rate threshold.

In this application, during service stop, the some or all of the first PCS lanes may be switched from the operating state to the sleep state based on an actual service traffic requirement. In this manner, power consumption at the physical layer can be further reduced when normal service transmission is ensured.

In an optional manner, the first PCS includes a plurality of first PCS lanes, and the first PCS sends the first indication code block via at least one of the plurality of first PCS lanes.

In this application, during service recovery, the first indication code block may be sent via all the plurality of first PCS lanes of the first PCS, or the first indication code block may be sent via some of the first PCS lanes. This is not specifically limited herein, provided that it is ensured that the receiving device can receive the first indication code block.

In an optional manner, the first PCS includes a plurality of first PCS lanes, and the first PCS sends the second indication code block via at least one of the plurality of first PCS lanes.

In this application, during service stop, the second indication code block may be sent via all the plurality of first PCS lanes of the first PCS, or the second indication code block may be sent via some of the first PCS lanes. This is not specifically limited herein, provided that it is ensured that the receiving device can receive the second indication code block.

In an optional manner, the first PHY includes a first physical media dependent (physical media dependent, PMD); and the first PHY switches, based on the first indication information, the first PMD from a keepalive state to an operating state, and the first PHY switches the first SerDes corresponding to the first PMD from a keepalive state to an operating state.

In this application, the first PMD is switched from the keepalive state to the operating state, and the first SerDes corresponding to the first PMD is switched from the keepalive state to the operating state, so that quick response to service recovery can be ensured, and user experience can be improved.

In an optional manner, the first PMD includes a plurality of first PMD lanes, and the first PMD switches the plurality of first PMD lanes from a keepalive state to an operating state; or the first PMD switches a part of the plurality of first PMD lanes from a keepalive state to an operating state based on the first service flow rate threshold.

In this application, during service recovery, the some or all of the first PMD lanes may be switched from the keepalive state to the operating state based on an actual service traffic requirement. In this manner, power consumption at the physical layer can be further reduced when normal service transmission is ensured.

In an optional manner, when the first SerDes is in the keepalive state, the first PHY periodically sends a keepalive code block to the receiving device via the first SerDes.

In this manner, it can be ensured that during service recovery, the first SerDes can respond to a service requirement in a timely manner, and recover service transmission.

In an optional manner, a length of the first indication code block is 10 bits, 64 bits, 66 bits, 128 bits, or 130 bits.

According to a second aspect, this application provides a data processing method, applied to a receiving device. The receiving device includes a second PHY. The receiving device may be a device in Ethernet or a device in super Ethernet, for example, a switch or a router. This is not specifically limited herein. The method is performed as follows:

The second PHY receives a first indication code block sent by a first PHY of a sending device, where the first indication code block indicates the second PHY to be switched from a sleep state to an operating state, and indicates a second SerDes corresponding to the second PHY to be switched from a keepalive state to an operating state. The second PHY switches, based on the first indication code block, the second PHY from the sleep state to the operating state, and the second SerDes corresponding to the second PHY from the keepalive state to the operating state.

In this application, the receiving device receives the first indication code block from the sending device, so that the receiving device performs state switching on a PHY based on the first indication code block, the PHY of the receiving device is switched from a sleep state to an operating state, and a SerDes corresponding to the PHY is switched from a keepalive state to an operating state. In this manner, when an Ethernet device does not operate, the PHY is in the sleep state, and the SerDes corresponding to the PHY is in the keepalive state, so that power consumption at the physical layer can be saved. Once a service is recovered, the Ethernet device may respond in a timely manner, the PHY is switched from the sleep state to the operating state, and the SerDes is switched from the keepalive state to the operating state. When service recovery is performed, the response is fast, and there is no need to buffer a large amount of service data during service recovery to wait for the Ethernet device recovers to operate. This can improve user experience, and improve data processing efficiency.

In an optional manner, the second PHY includes a second PCS and a second PMA, and that the second PHY is switched from the sleep state to the operating state includes: The second PCS is switched from a sleep state to an operating state, and the second PMA is switched from a sleep state to an operating state.

In this application, that the second PHY is switched from the sleep state to the operating state includes: The second PCS is switched from the sleep state to the operating state, and the first PMA is switched from the sleep state to the operating state. This can ensure quick response to service recovery, and improve user experience.

In an optional manner, the second PHY receives a second indication code block sent by the first PHY of the sending device, where the second indication code block indicates the second PHY to be switched from the operating state to the sleep state, and indicates the second SerDes corresponding to the second PHY to be switched from the operating state to the keepalive state. The second PHY switches, based on the second indication code block, the second PHY from the operating state to the sleep state, and the second SerDes corresponding to the second PHY from the operating state to the keepalive state.

In this application, the receiving device receives the second indication code block from the sending device, so that the receiving device performs state switching on a PHY based on the second indication code block, the PHY of the receiving device is switched from an operating state to a sleep state, and a SerDes corresponding to the PHY is switched from an operating state to a keepalive state. In this manner, when the Ethernet device does not operate, the PHY is in the sleep state, and the SerDes corresponding to the PHY is in the keepalive state, so that power consumption at the physical layer can be saved.

In an optional manner, the second PHY includes the second PCS and the second PMA, and that the second PHY is switched from the operating state to the sleep state includes: The second PCS is switched from the operating state to the sleep state and the second PMA is switched from the operating state to the sleep state.

In this application, that the second PHY is switched from the operating state to the sleep state includes: The second PCS is switched from the operating state to the sleep state, and the second PMA is switched from the operating state to the sleep state. This can ensure quick response to service stop, and reduce power consumption.

In an optional manner, the second PMA switches the second PMA from the sleep state to the operating state based on the first indication code block; the second PMA sends first indication information to the second PCS; and the second PCS receives the first indication information, and switches the second PCS from the sleep state to the operating state.

In this application, when the second PMA switches the second PMA from the sleep state to the operating state based on the first indication code block, the first indication code block may be transparently transmitted to the second PCS; or the first indication information may be obtained, and the first indication information is transmitted to the second PCS, so that the second PCS performs state switching. Regardless of which manner is used, it can be ensured that both the second PCS and the second PMA are switched from the sleep state to the operating state, to ensure quick service recovery and improve data processing efficiency.

In an optional manner, the second PMA switches the second PMA from the operating state to the sleep state based on the second indication code block; the second PMA sends second indication information to the second PCS; and the second PCS receives the second indication information, and switches the second PCS from the operating state to the sleep state.

In this application, when the second PMA switches the second PMA from the operating state to the sleep state based on the second indication code block, the second indication code block may be transparently transmitted to the second PCS; or the second indication information may be obtained, and the second indication information is transmitted to the second PCS, so that the second PCS performs state switching. Regardless of which manner is used, it can be ensured that both the second PCS and the second PMA are switched from the sleep state to the operating state, to ensure quick service stop and improve data processing efficiency.

In an optional manner, the second PCS includes a plurality of second PCS lanes, and the second PCS switches the plurality of second PCS lanes from a sleep state to an operating state; or the second PCS switches a part of the plurality of second PCS lanes from a sleep state to an operating state based on a first service flow rate threshold.

In this application, during service recovery, the some or all of the second PCS lanes may be switched from the sleep state to the operating state based on an actual service traffic requirement. In this manner, power consumption at the physical layer can be further reduced when normal service transmission is ensured.

In an optional manner, the second PCS includes a plurality of second PCS lanes, and the second PCS switches the plurality of second PCS lanes from an operating state to a sleep state; or the second PCS switches a part of the plurality of second PCS lanes from an operating state to a sleep state based on a second service flow rate threshold.

In this application, during service stop, the some or all of the second PCS lanes may be switched from the operating state to the sleep state based on an actual service traffic requirement. In this manner, power consumption at the physical layer can be further reduced when normal service transmission is ensured.

In an optional manner, the second PHY includes a second physical media dependent PMD; and the second PHY switches, based on the first indication code block, the second PMD from a keepalive state to an operating state, and the second PHY switches the second SerDes corresponding to the second PMD from a keepalive state to an operating state.

In this application, the second PMD is switched from the keepalive state to the operating state, and the second SerDes corresponding to the second PMD is switched from the keepalive state to the operating state, so that quick response to service recovery can be ensured, and user experience can be improved.

In an optional manner, the second PMD includes a plurality of second PMD lanes, and the second PMD switches the plurality of second PMD lanes from a keepalive state to an operating state; or the second PMD switches a part of the plurality of second PMD lanes from a keepalive state to an operating state based on the first service flow rate threshold.

In this application, during service recovery, the some or all of the second PMD lanes may be switched from the keepalive state to the operating state based on an actual service traffic requirement. In this manner, power consumption at the physical layer can be further reduced when normal service transmission is ensured.

In an optional manner, the second PCS includes a plurality of second PCS lanes, and the second PCS receives the second indication information via at least one of the plurality of second PCS lanes.

In an optional manner, when the second SerDes is in the keepalive state, the second PHY periodically receives a keepalive code block via the second SerDes.

In an optional manner, a length of the first indication code block is 10 bits, 64 bits, 66 bits, 128 bits, or 130 bits.

According to a third aspect, an embodiment of this application provides a data processing method, applied to a sending device. The sending device includes a first MAC layer and a first PHY. The sending device may be a device in Ethernet or a device in super Ethernet, for example, a switch or a router. This is not specifically limited herein. The method is performed as follows:

The first PHY receives second indication information from the first MAC layer, where the second indication information indicates the sending device to stop sending a service flow to a receiving device. The first PHY obtains a second indication code block based on the second indication information, where the second indication code block indicates a second PHY of the receiving device to be switched from the operating state to the sleep state, and indicates the second SerDes corresponding to the second PHY to be switched from the operating state to the keepalive state. The first PHY sends the second indication code block to the receiving device.

In an optional manner, the first PHY switches, based on the second indication information, the first PHY from an operating state to a sleep state, and a first SerDes corresponding to the first PHY from an operating state to a keepalive state.

In an optional manner, the first PHY includes a first PCS and a first PMA, and that the first PHY obtains the second indication code block based on the second indication information includes:

The first PCS switches, based on the second indication information, the first PCS from an operating state to a sleep state, and obtains the second indication code block; the first PCS sends the second indication code block to the first PMA; and the first PMA switches the first PMA from an operating state to a sleep state based on the received second indication code block.

In an optional manner, that the first PHY obtains the second indication code block based on the second indication information includes:

The first PCS switches the first PCS from an operating state to a sleep state based on the second indication information, and sends the second indication information to the first PMA; and the first PMA switches, based on the received second indication information, the first PMA from an operating state to a sleep state, and obtains the second indication code block.

In an optional manner, the first PCS includes a plurality of first PCS lanes, and that the first PCS switches the first PCS from the operating state to the sleep state based on the second indication information includes:

The first PCS switches the plurality of first PCS lanes from an operating state to a sleep state; or the first PCS switches a part of the plurality of first PCS lanes from an operating state to a sleep state based on a second service flow rate threshold.

In an optional manner, the first PCS includes a plurality of first PCS lanes, and that the first PCS sends the second indication code block to the first PMA includes:

The first PCS sends the second indication code block via at least one of the plurality of first PCS lanes.

In an optional manner, when the first SerDes is in the keepalive state, the first PHY periodically sends a keepalive code block to the receiving device via the first SerDes.

In an optional manner, a length of the second indication code block is 10 bits, 64 bits, 66 bits, 128 bits, or 130 bits.

According to a fourth aspect, this application provides a data processing method, applied to a receiving device. The receiving device includes a second physical layer PHY. The receiving device may be a device in Ethernet or a device in super Ethernet, for example, a switch or a router. This is not specifically limited herein. The method is performed as follows:

The second PHY receives a second indication code block sent by the first PHY of the sending device, where the second indication code block indicates the second PHY to be switched from the operating state to the sleep state, and indicates the second SerDes corresponding to the second PHY to be switched from the operating state to the keepalive state. The second PHY switches, based on the second indication code block, the second PHY from the operating state to the sleep state, and the second SerDes corresponding to the second PHY from the operating state to the keepalive state.

In an optional manner, the second PHY includes a second PCS and a second PMA, and that the second PHY is switched from the operating state to the sleep state includes: The second PCS is switched from an operating state to a sleep state and the second PMA is switched from an operating state to a sleep state.

In an optional manner, that the second PHY switches the second PHY from the operating state to the sleep state based on the second indication code block includes:

The second PMA switches the second PMA from the operating state to the sleep state based on the second indication code block; the second PMA sends second indication information to the second PCS; and the second PCS receives the second indication information, and switches the second PCS from the operating state to the sleep state.

In an optional manner, the second PCS includes a plurality of second PCS lanes, and that the second PCS receives the second indication information includes:

The second PCS receives the second indication information via at least one of the plurality of second PCS lanes.

In an optional manner, the second PCS includes a plurality of second PCS lanes, and that the second PCS receives the second indication information, and switches the second PCS from the operating state to the sleep state includes:

The second PCS switches the plurality of second PCS lanes from an operating state to a sleep state; or the second PCS switches a part of the plurality of second PCS lanes from an operating state to a sleep state based on a second service flow rate threshold.

In an optional manner, when the second SerDes is in the keepalive state, the second PHY periodically receives a keepalive code block via the second SerDes.

In an optional manner, a length of the second indication code block is 10 bits, 64 bits, 66 bits, 128 bits, or 130 bits.

According to a fifth aspect, an embodiment of this application provides a data processing apparatus. The data processing apparatus may be a sending device (for example, the sending device in the first aspect, the sending device in the second aspect, the sending device in the third aspect, or the sending device in the fourth aspect) or a chip disposed inside the sending device, or may be a receiving device (for example, the receiving device in the first aspect, the receiving device in the second aspect, the receiving device in the third aspect, or the receiving device in the fourth aspect), or a chip disposed inside the receiving device. The communication apparatus has a function of implementing any one of the first aspect to the fourth aspect. For example, the data processing apparatus includes a corresponding module, unit, or means (means) for performing steps in any one of the first aspect to the fourth aspect. The function, unit, or means may be implemented by software, implemented by hardware, or implemented by executing corresponding software by hardware.

In a possible design, the data processing apparatus includes a processing unit and a transceiver unit. The transceiver unit may be configured to send and receive an indication code block or indication information, to implement communication between the data processing apparatus and another apparatus. The processing unit may be configured to perform some internal operations of the data processing apparatus. The transceiver unit may be referred to as an input/output unit, a communication unit, or the like, and the transceiver unit may be a transceiver. The processing unit may be a processor. When the data processing apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the data processing apparatus includes a processor, and may further include a transceiver. The transceiver is configured to receive and send a signal, and the processor executes program instructions, to complete the method in any one of the possible designs or implementations of the first aspect to the fourth aspect. The data processing apparatus may further include one or more memories. The memory is configured to be coupled to the processor, and the memory may store a necessary computer program or instructions for implementing the function in any one of the first aspect to the fourth aspect. The processor may execute the computer program or the instructions stored in the memory. When the computer program or the instructions are executed, the data processing apparatus is enabled to implement the method in any one of the possible designs or implementations of the first aspect to the fourth aspect.

In still another possible design, the data processing apparatus includes a processor. The processor may be configured to be coupled to a memory. The memory may store a necessary computer program or instructions for implementing the function in any one of the first aspect to the fourth aspect. The processor may execute the computer program or the instructions stored in the memory. When the computer program or the instructions are executed, the data processing apparatus is enabled to implement the method in any one of the possible designs or implementations of the first aspect to the fourth aspect.

In still yet another possible design, the data processing apparatus includes a processor and an interface circuit. The processor is configured to communicate with another apparatus through the interface circuit and perform the method in any one of the possible designs or implementations of the first aspect to the fourth aspect.

It may be understood that in the fifth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. In addition, there may be one or more processors, and there may be one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a sixth aspect, an embodiment of this application provides a data processing system. The data processing system includes the sending device and the receiving device that are in the first aspect to the fourth aspect.

According to a seventh aspect, this application provides a chip system. The chip system includes a processor, and may further include a memory, configured to implement the method in any one of the possible designs of the first aspect to the fourth aspect. The chip system may include a chip, or may include a chip and another discrete component.

According to an eighth aspect, this application provides an integrated circuit, where the integrated circuit includes an interface circuit and a control circuit, and the interface circuit is coupled to the control circuit. The interface circuit is configured to receive, through a first PHY, first indication information from a first MAC layer, where the first indication information indicates the sending device to send a service flow to a receiving device. The control circuit is configured to obtain, through the first PHY, a first indication code block based on the first indication information, where the first indication code block indicates a second PHY of the receiving device to be switched from a sleep state to an operating state, and indicates a second serializer/deserializer SerDes corresponding to the second PHY to be switched from a keepalive state to an operating state. The interface circuit is further configured to send, through the first PHY, the first indication code block to the receiving device.

According to a ninth aspect, this application provides another integrated circuit, where the integrated circuit includes an interface circuit and a control circuit, and the interface circuit is coupled to the control circuit. The interface circuit is configured to receive, through a second PHY, a first indication code block sent by a first PHY of a sending device, where the first indication code block indicates the second PHY to be switched from a sleep state to an operating state, and indicates a second serializer/deserializer SerDes corresponding to the second PHY to be switched from a keepalive state to an operating state. The control circuit is configured to switch, through the second PHY based on the first indication code block, the second PHY from the sleep state to the operating state, and the second SerDes corresponding to the second PHY from the keepalive state to the operating state.

According to a tenth aspect, this application further provides a computer-readable storage medium. The computer-readable storage medium stores computer-readable instructions. When the computer-readable instructions are run on a computer, the computer is enabled to perform the method in any one of the possible designs of the first aspect to the fourth aspect.

According to an eleventh aspect, this application provides a computer program product including instructions. When the computer program product runs on a computer, the computer is enabled to perform the method in various embodiments of the first aspect to the fourth aspect.

For technical effects that can be achieved in the second aspect to the eleventh aspect, refer to the descriptions of the technical effects that can be achieved in the corresponding possible design solutions in the first aspect. Details are not described herein again in this application.

### BRIEF DESCRIPTION OF DRAWINGS

FIG. 1 is a diagram of interface composition and communication;
FIG. 2A is a diagram of composition and communication of an electrical chip interface;
FIG. 2B is a diagram of a PCS logical function;
FIG. 2C is a diagram of another PCS logical function;
FIG. 2D is a diagram of a PMD logical function;
FIG. 2E is a diagram of implementing a PHY through an electrical chip and an optical module chip;
FIG. 2F is a diagram of a lane implementing a 100GE PHY through an electrical chip and an optical module chip;
FIG. 3 is a schematic flowchart of data processing;
FIG. 4 is a diagram of structures of a SerDes and a PHY;
FIG. 5 is a diagram of transmission of a keepalive code block;
FIG. 6 is a schematic flowchart of data processing;
FIG. 7 is a schematic flowchart of data processing;
FIG. 8 is a schematic flowchart of data processing;
FIG. 9 is a diagram of a structure of a communication apparatus according to an embodiment of this application;
FIG. 10 is a diagram of a structure of another data processing apparatus; and
FIG. 11 is a diagram of a structure of another data processing apparatus.

### DESCRIPTION OF EMBODIMENTS

In this application, a media independent interface (media independent interface, MII) is referred to as an MII at 10 Mb/s and 100 Mb/s, is referred to as a GMII at 1000 Mb/s, and is referred to as an XGMI at 10 Gb/s. An xMII in this application may include various types of Ethernet interfaces like an RMII (reduced MII), a serial MII (serial MII, SMII), a serial synchronous MII (serial sync MII, SSMII), a source synchronous SMII (source synchronous SMII, S3MII), a gigabit MII (Gigabit MII, GMII), an RGMII (Reduced GMII), a serial GMII (serial GMII, SGMII), a ten bit interface (ten bit interface, TBI), an RTBI (Reduced TBI), a 10 gigabit MII (10 Gigabit MII, XGMII), a 25 gigabit MII (25 Gigabit MII), a 40 gigabit MII, a 50 gigabit MII, a 100 gigabit MII (100 Gb/s MII, CGMII), a 200 gigabit MII (200 Gb/s MII, 200GMII), a 400 gigabit MII (400 Gb/s MII, 400GMII), a 800 gigabit MII, and a 1.6 terabit MII.

A 200GbE/400GbE rate standard implements a next-generation Ethernet rate standard based on a four-level pulse amplitude modulation (four-level pulse amplitude modulation, PAM4) technology for a 50G single-lane electrical interface. In research of a next-generation Ethernet 800G/1.6TE standard, as a rate of the single-lane electrical interface is increased to 100G PAM4 or 200G (N-level pulse amplitude modulation PAM-N, where N=4, 6, or 8), a next-generation rate may support the rate of the electrical interface, and needs to be compatible with an old 50G per lane electrical interface. An optical interface rate may evolve along a plurality of paths, such as a rate 50 Gbps/100 Gbps/200 Gbps/400 Gbps/800 Gbps per wavelength.

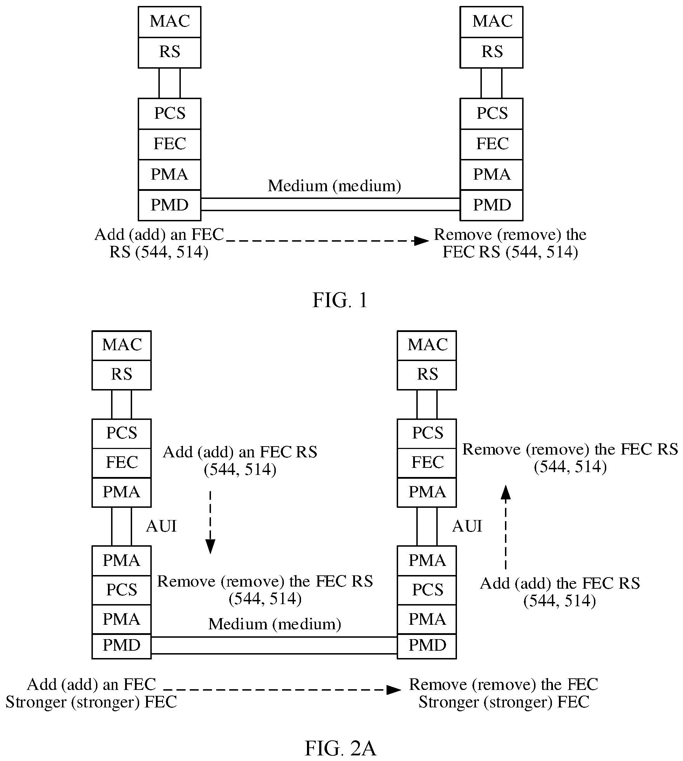

Currently, there are a plurality of Ethernet interface logical layer solutions, and interface logical layers with different rates have common features and distinct differences. Due to these differences, it is difficult to share hardware resources between different rates, or a plurality of low-rate Ethernet interfaces are bound to one high-rate interface module for interworking. For example, a logical layer architecture in FIG. 1 is used for a 200GbE/400GbE interface. In FIG. 1, a device interface includes a medium access control (medium access control, MAC) layer, a reconciliation sublayer (reconciliation sublayer, RS), a physical coding sublayer (physical coding sublayer, PCS), a forward error correction (forward error correction, FEC), a physical medium attachment (physical medium attachment, PMA), and a physical media dependent (physical media dependent, PMD). The PCS, the FEC, the PMA, and the PMD belong to a physical layer (physical layer, PHY). Data of a sending device is processed and sent from the PMD to a PMD of a receiving device, and then reaches a MAC layer after being processed through a plurality of submodules. The PCS sublayer is used to implement functions such as 64B/66B encoding/decoding, transcoding, scrambling, alignment marker (alignment marker, AM) insertion, and FEC encoding/decoding. The PMA sublayer is used to implement functions such as clock recovery, carrier detection, and PAM4 modulation/demodulation. The PMD sublayer is used to perform parallel-to-serial/serial-to-parallel conversion on received data, and modulate digital signals to a line for sending. At a FEC sublayer in the PCS, a new interleaved FEC (for example, a Reed-Solomon RS (544, 514) FEC) is introduced, so that the logical layer is greatly different from that in a 100GbE solution, and a work amount of re-development is heavy. For another example, an architecture shown in FIG. 2A is used for a logical layer defined in 400G-ZR. FIG. 2A is a diagram of composition of an electrical chip interface. In the logical layer architecture, an optical module that supports 400G-ZR (80 km) cannot support 2*200GbE interfaces because an interface on a host side is fixedly a 400G AUI (attachment unit interface, AUI).

Data transmission scenarios in FIG. 1 and FIG. 2A are applicable to a unified bus (unified bus, UB), an infinite bandwidth (infiniband, IB), a peripheral component interconnect express (peripheral component interconnect express, PCIE), or the like in the Ethernet, super Ethernet, or another similar data communication system. This is not specifically limited in this application. The sending device and the receiving device may be switches, routers, or the like. This is not specifically limited in this application. In addition, it should be further noted that only one sending device and one receiving device are shown in FIG. 1. However, during actual application, there may be a plurality of sending devices and a plurality of receiving devices in a data processing scenario, and a sending device may alternatively be used as a receiving device, and a receiving device may alternatively be used as a sending device. This is not specifically limited in this application.

To describe the solutions of this application more clearly, the PHY is described in detail. The PHY includes a PCS, a PMA, a PMD, and the like. It should be noted that the PCS, the PMA, and the PMD are sublayers of the PHY. A lane (lane) is disposed between the PCS and the PMA, a lane is disposed between a PMA in an electrical chip and a PMA in an optical module chip, a lane is disposed between the PMD and a medium (Medium), and a lane is disposed between the PMA and the PMD. For example, there is a logical lane between the PCS and the PMA, which may also be referred to as a PCS lane; there may be another logical lane between the PCS and the PMA, which may also be referred to as an FEC lane; and there may be a physical lane between the PMA in the electrical chip and the PMA in the optical module chip, which may also be referred to as a PMA lane. In addition, there may further be a logical lane between the PMA layer and the PMD. There may be a physical lane between the PMD and the medium, which may also be referred to as a PMD lane. The logical lane is also referred to as a virtual lane. A quantity of lanes may be set based on an actual requirement, and a specific quantity is not limited. For example, a quantity of PCS lanes is set to 8, 10, 12, or 16. This is merely an example for description, and a quantity of logical lanes is not specifically limited herein.

The PCS is usually connected to a MAC chip through an MII. Specifically, the PCS is connected to an RS in the MAC chip through the MII. At the PHY, the PCS is mainly configured to reduce overheads, and has specific error detection and error correction capabilities. For example, in the sending device, the PCS includes a 64B/66B encoding module. The 64B/66B encoding module converts a 72B code block into a 66B code block, to reduce the overheads. The PCS may further include a 256B/257B encoding module. The 256B/257B encoding module compresses every four 66B code blocks into one 257B code block, to further reduce the overheads. The PCS may further include a scrambling module. The scrambling module is configured to change content of a sequence, so that quantities of 0s and 1s in a data sequence are balanced, and a frequency of 0/1 jump is ensured, to help a phase-locked loop of the receiving device work. A random number cycle is long enough to prevent the phase-locked loop from becoming invalid due to malicious intrusion. The PCS may further include a distribution and interleaving module. The distribution and interleaving module is configured to distribute two RS codewords to PCS lanes after encoding is completed, to distribute codewords A/B on each PCS lane in an interleaved manner, so as to achieve an interleaving effect. The PCS may further include an AM insertion module. The AM module is configured to cause the receiving device to find a boundary of the RS codeword. In addition, the PCS may further include an FEC. The FEC is used to improve error detection and error correction capabilities of the PHY.

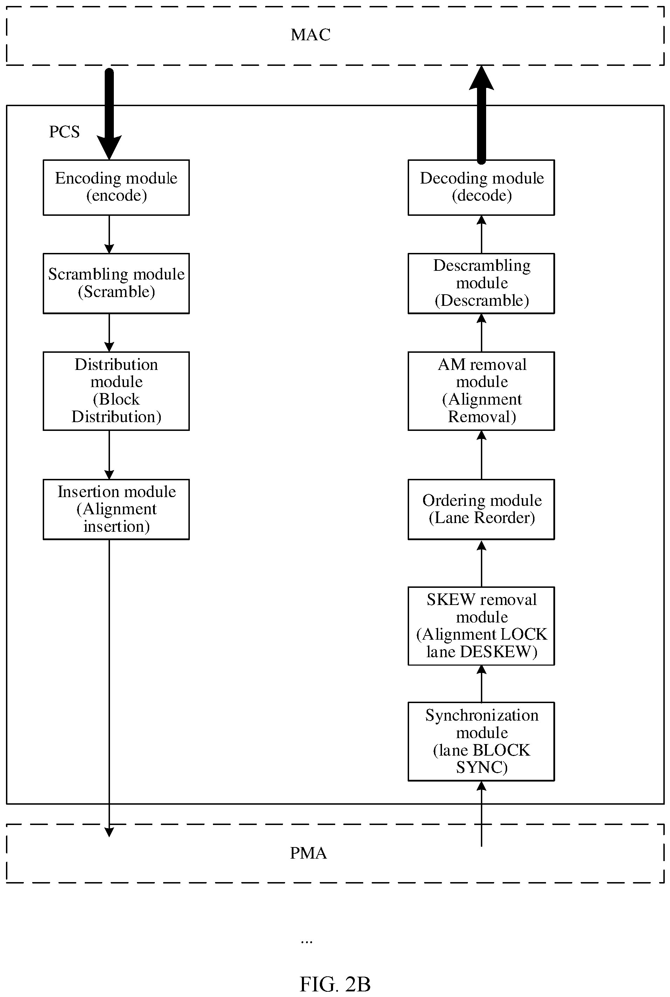

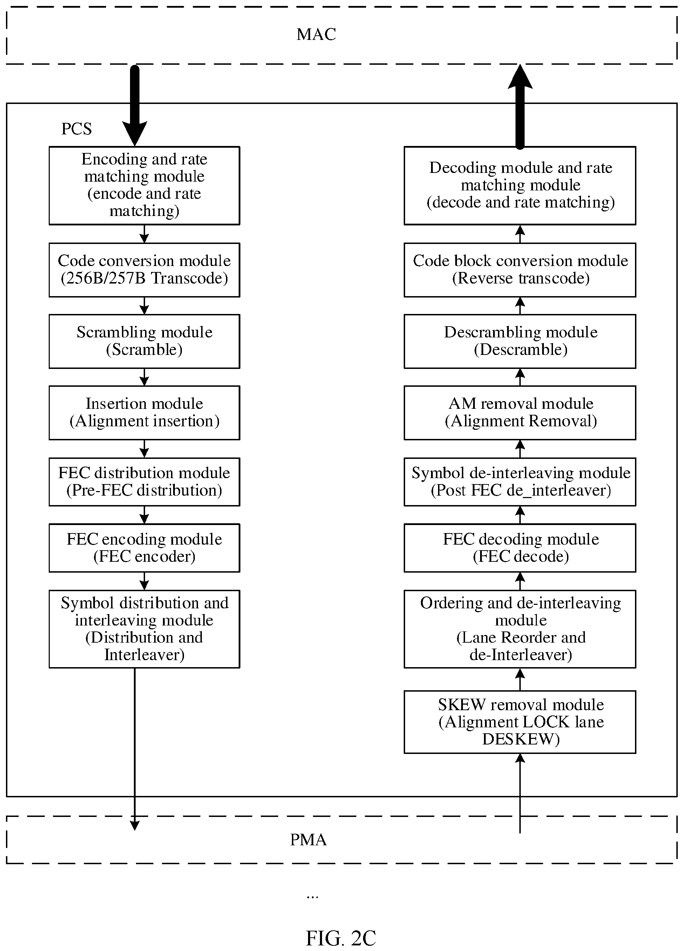

Logical functions executable by the PCS are shown in FIG. 2B and FIG. 2C. FIG. 2B indicates logical functions of 40GBASE-R and 100GBASE-R, and FIG. 2C indicates logical functions of 200GBASE-R and 400GBASE-R. Compared with FIG. 2B, FIG. 2C is added with an FEC, and shows adjustment on some execution logic. 40GBASE-R, 100GBASE-R, 200GBASE-R, and 400GBASE-R indicate types of the PHY. 40GBASE-R is used as an example for description. "40G" indicates a rate, "BASE" indicates that a modulation type is Baseband (bandwidth modulation), and "R" indicates that 64B/66B encoding is used. The following first describes the logical functions of the PCS with reference to FIG. 2B. After receiving data information from a MAC, a PCS of a sending device performs encoding through an encoding module (encode) to obtain an encoded block, scrambles the encoded block through a scrambling module (Scramble) to obtain a scrambled encoded block, distributes the scrambled encoded block through a distribution module (Block Distribution), inserts an AM into the scrambled encoded block through an AM (alignment marker) insertion module, and then transmits data to a PMA via a logical lane. Data processing logic of the PMA and a layer below the PMA is not described herein. A PCS of the receiving device receives a code block from the PMA, synchronizes code blocks of all virtual lanes through a block synchronization module (lane BLOCK SYNC), and then removes SKEW between PCS virtual lanes through a SKEW removal module (Alignment LOCK lane DESKEW). After the SKEW between the PCS virtual lanes is removed, data streams are sorted through an ordering module (Lane Reorder) based on the PCS virtual lanes, so that the data streams can enter correct PCS lanes. An AM in the code block is removed through an AM removal module (Alignment Removal), the code block is descrambled through a descrambling module (Descramble), and then decoding is performed through a decoding module (decode) to obtain the data information. SKEW is a processing module, and is configured to remove skew between PCS lanes. Specifically, after an AM operation is completed, skew occurs on the PCS lanes. In this case, the SKEW module is used to remove the skew, to ensure that the PCS lanes are aligned with physical lanes in subsequent processing.

The following describes the logical functions of the PCS with reference to FIG. 2C. Because 200GBASE-R and 400GBASE-R are large, after receiving data information from a MAC, a PCS of a sending device performs encoding and rate matching through an encoding and rate matching module (encode and rate matching) to obtain an encoded block, converts four 66-bit blocks in the encoded block into one 257-bit block through a code conversion module (256B/257B Transcode), scrambles the encoded block through a scrambling module (Scramble) to obtain a scrambled encoded block, inserts an AM into the scrambled encoded block through an insertion module (Alignment insertion), performs splitting and distribution through an FEC distribution module (Pre-FEC distribution) based on a symbol before FEC encoding, performs FEC encoding through an FEC encoding module (FEC encoder), performs distribution and symbol interleaving through a distribution and interleaving module (Distribution and Interleaver), and then transmits data to a PMA via a logical lane. Data processing logic of the PMA and a layer below the PMA is not described herein. A PCS of the receiving device receives a code block from the PMA, removes SKEW between PCS virtual lanes through a SKEW removal module (Alignment LOCK lane DESKEW), performs ordering and de-interleaving on data streams through a ordering and de-interleaving module (Lane Reorder and de-Interleaver) after the SKEW between the PCS virtual lanes is removed, performs FEC decoding through an FEC decoding module (FEC decode), performs de-interleaving, through a symbol de-interleaving module (Post FEC de_interleaver), on symbols obtained through FEC decoding, removes an AM in the code block through an AM removal module (Alignment Removal), descrambles the code block through a descrambling module (Descramble), converts 257-bit blocks to 66-bit blocks through a code block conversion module (Reverse transcode), and then performs encoding/decoding and rate matching through a decoding module and rate matching module (decode and rate matching) to obtain the data information.

It should be noted that, the 200GBASE-R PCS and the 400GBASE-R PCS provide all services needed by an MII whose MAC layer rate is 200G and an MII whose MAC layer rate is 400G (denoted as an 200GMI/400GMII hereinafter), and including the following content:
(a) Encode (decode) eight 200GMI/400GMII data bytes to (from) 66-bit blocks (64B/66B).
(b) Transcode the 66-bit blocks to (from) 257-bit blocks, and then perform scrambling (descrambling).
(c) 257-bit blocks obtained through Reed-Solomon encoding (decoding).
(d) Transfer encoded data to the PMA or transfer encoded data to the PMA after interleaving processing.
(e) Compensate, through insertion or deletion of an idle control character, any rate difference caused by insertion or deletion of an alignment marker or due to any rate difference between the 200GMII/400GMII and the PMA.
(f) Determine time when a functional link is established and notify a management entity through a management data input/output (management data input/output, MDIO) when the PHY is ready for use.

It should be further noted that main functions of the PMA in sending and receiving directions include the following content:
(a) Adapt signals formatted by the PCS lanes to an appropriate quantity of abstract or physical lanes.
(b) Provide per-input-lane clock and data recovery.
(c) Provide bit-level multiplexing.
(d) Provide clock generation.
(e) Provide signal driving.
(f) Optionally provide local loopback to a PMA service interface or provide local loopback from a PMA service interface.
(g) Optionally provide remote loopback to a PMD service interface or provide remote loopback from a PMA service interface.
(h) Optionally provide test-mode generation and detection.
(i) Tolerate SKEW variation.
(j) Perform PAM4 encoding and decoding on a 200GBASE-R PMA with four physical lanes and a 400GBASE-R PMA with four or eight physical lanes.

The PMA is configured to perform modulation and demodulation, and a commonly used channel transmission modulation format (modulation format) includes: non-return-to-zero (non-return-to-zero, NRZ), PAM4, and 16 quadrature amplitude modulation (16 quadrature amplitude modulation, 16-QAM). In addition, the PMA is further configured to implement clock and data recovery (clock and data recovery, CDR) and signal driving. The CDR is used for extracting a clock from a received signal and recovering binary data, to implement analog-to-digital conversion. The signal driving is used for providing power driving for transmission of an attachment unit interface (attachment unit interface, AUI) signal, to implement digital-to-analog conversion.

The PMD implements a transmitter of an electrical/optical signal and a connector of a transmission medium.

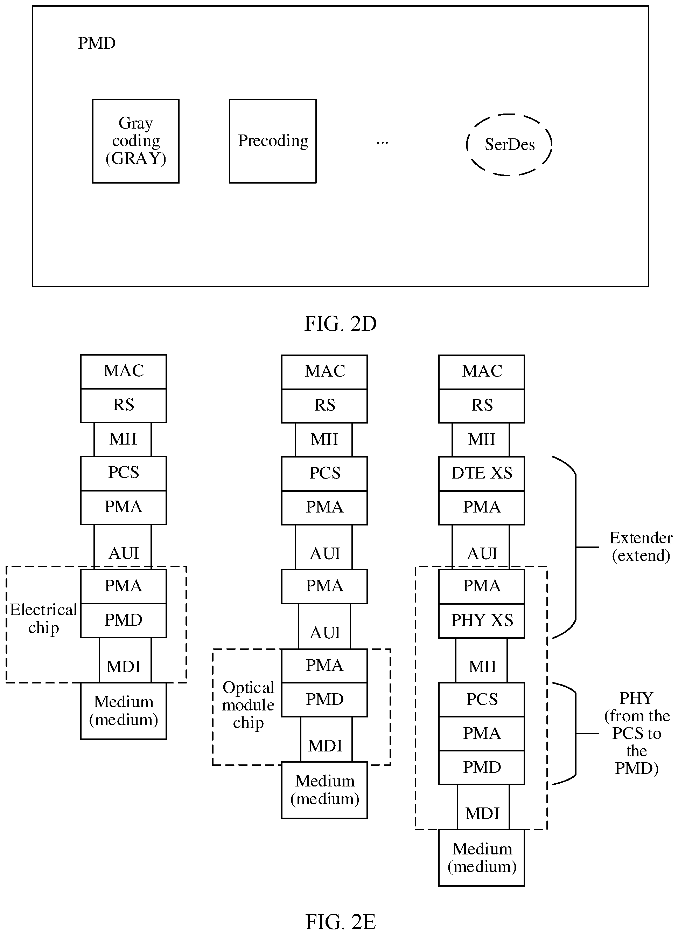

In addition, after receiving data from the PMA, as shown in FIG. 2D, a PMD service-based interface of the sending device may perform operations such as Gray coding (GRAY) and precoding, and then transmit the data to the receiving device.

It should be noted that FIG. 1 in this embodiment of this application is described by using an implementation in which the PHY is implemented through an electrical chip. The PMD of the sending device in FIG. 1 is configured to connect to an electrical transmission medium.

In an actual application scenario, the PHY may alternatively be implemented through cooperation between an electrical chip (shown by a dashed line in FIG. 2E) and an optical module chip (shown by a dashed line in FIG. 2E), as shown in FIG. 2E.

For example, the PHY includes the electrical chip and the optical module chip. The electrical chip includes a PCS and a PMA. The PCS of the electrical chip is connected to the RS of the MAC chip through an MII, and the PMA in the electrical chip is connected to a PMA in the optical module chip through an AUI. In addition, the optical module chip further includes a PMD. The PMD in the optical module chip is connected to an optical transmission medium through a medium dependent interface (medium dependent interface, MDI).

For another example, the PHY includes the electrical chip, a PMA module, and the optical module chip. The electrical chip includes a PCS and a PMA. The PCS of the electrical chip is connected to the RS of the MAC chip through an MII, and the PMA in the electrical chip is connected to the PMA module through an AUI, where the PMA module may be implemented by an independent chip. The PMA module is connected to a PMA in the optical module chip through an AUI. In addition, the optical module chip further includes a PMD. The PMD in the optical module chip is connected to an optical transmission medium through an MDI.

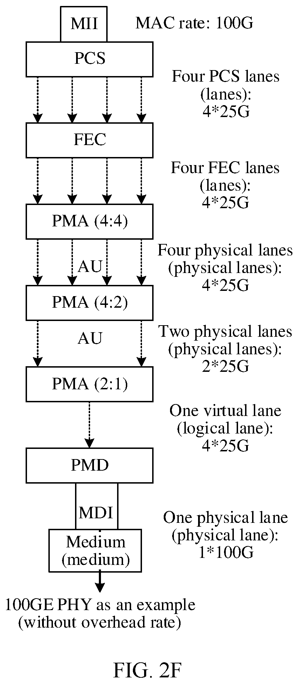

In the foregoing architecture, for example, a 100GE PHY is implemented by using an architecture including the electrical chip, the PMA module, and the optical module chip, as shown in FIG. 2F. Generally, PCS lanes included at the PCS are logical lanes, for example, four 25G PCS lanes. Correspondingly, the PCS may further include four 25G FEC lanes (logical lanes). The PMA in the electrical chip includes four 25G PMA lanes (physical lanes), which corresponds to the four 25G PCS lanes. The PMA in the electrical chip includes four 25G PMA lanes connected to the PMA module. Correspondingly, the PMA module may include two 50G PMA lanes (physical lanes), and the two 50G PMA lanes of the PMA module are used to connect to the PMA in the optical module chip. The PMA in the optical module chip includes one 100G PMA lane (logical lane), which corresponds to the two 50G PMA lanes. The 100G PMA lane is configured to connect to the PMD in the optical module chip. The PMD in the optical module chip includes one 100G PMD lane (physical lane), which corresponds to one 100G PMA lane. The PMD in the optical module chip includes one 100G PMD lane used to connect to the medium.

In the foregoing architecture, the AUI is a lane for chip interconnection, and serial-to-parallel conversion is usually performed on two sides of the AUI through a SerDes. Therefore, the serializer/deserializer (serializer/deserializer, SerDes) implements some functions of the PMA in the PHY. In addition, the PMD is a connector of the transmission medium, and a function of the PMD is usually implemented by the SerDes. Therefore, the SerDes is mainly configured to implement functions of the PMA and PMD in the PHY. In other words, the SerDes physically implements some functions of the PHY in terms of a protocol.

It should be noted that the SerDes is a serial-to-parallel signal conversion device, and performs parallel-to-serial (serialization) conversion on a parallel signal and performs serial-to-parallel (deserialization) conversion on a serial signal. The SerDes is a part of the PHY. A conventional parallel bus is generally for single-ended signal transmission, and may be connected in a multidrop manner or a point-to-point manner. A clock is separated from data. When a data rate is further increased, bandwidth may be increased by increasing a bus width and a clock rate. However, clock coordination is required (this is because strict setup holding time needs to be met between the data and the clock, crosstalk, a weak capability of resisting common-mode interference, and electromagnetic interference (electromagnetic interference, EMI) of a device exist between signals, excessive printed circuit board (printed circuit board, PCB) space is occupied, and the like). As a result, a bus clock rate can only reach hundreds of megabits per second. A high-speed serial data bus overcomes the shortcomings of the parallel bus and increases a data transmission rate by several levels. The SerDes has the following advantages:
(1) The serial signal is used, to reduce difficulty in board cabling, impact of crosstalk between signals, and difficulty in a timely manner sequence design.
(2) Skew in parallel signal transmission is removed, and the data transmission rate is increased.
(3) No dedicated clock signal is needed (where the clock is directly recovered from the data). Transmission of the data and the clock is performed on one chip pin (pin). This greatly saves pins, reduces encapsulation costs, and saves board space. There is no independent clock, and a clock signal is extracted from the data.
(4) Through output by using a serial differential data bus, the capability of resisting common-mode interference can be improved.
(5) Signal quality is improved through processing, for example, preprocessing on a transmit side and filtering on a receive side, so that impact of the external environment on a signal is greatly reduced.
(6) The SerDes supports cross-board connection of a chip. This expands an application scope of the chip and improves architecture scalability.

With reference to the foregoing descriptions, SerDeses are in one-to-one correspondence with physical lanes. For example, the PMA in the electrical chip includes four 25G PMA lanes. This means that physically, there are four SerDeses. In this embodiment of this application, energy saving control and state switching control implemented by a SerDes are energy saving control and state switching control implemented by at least one of a SerDes implementing a PMA function and a SerDes implementing a PMD function.

With expansion of Ethernet capacity requirements, a service has increasingly high requirements on a rate of an Ethernet link, and power consumption at the PHY is increasingly high. In a related technology, it is proposed that the SerDes be disabled when there is no service transmission to save power consumption. However, during service recovery, it takes long time for the SerDes to recover to operate. During the recovery of the SerDes, a large amount of service data is buffered, and a service data delay exists. In this manner, service experience of a user is degraded, and buffering of a large number of services may need a chip with a higher rate, resulting in increase in device costs. In view of this, a new data processing method is urgently needed, to reduce buffering of service data and improve user experience when reducing PHY power consumption. Data processing in this application mainly considers service suspension and service recovery in a service flow transmission process.

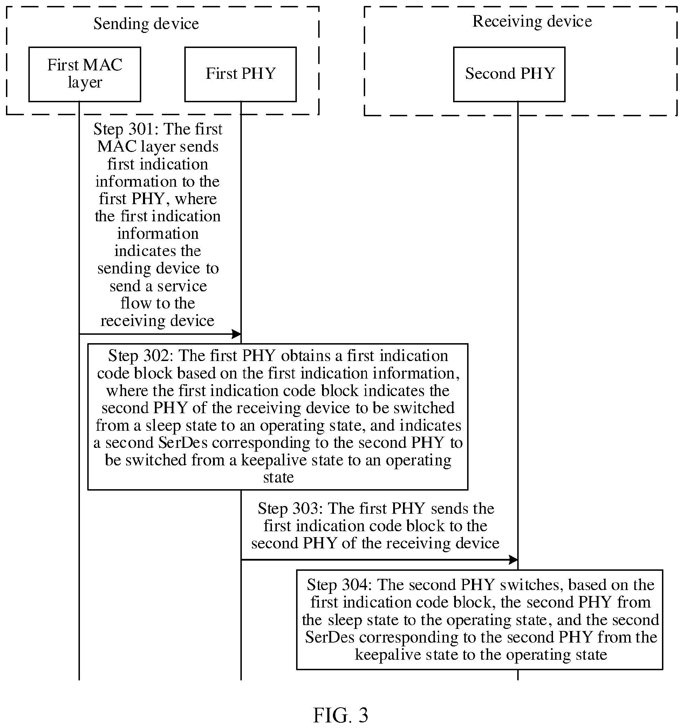

FIG. 3 is a schematic flowchart of a data processing method according to an embodiment of this application. The method may be performed through data exchange between a sending device and a receiving device. The sending device and the receiving device may be devices in the Ethernet, or may be devices in the super Ethernet. This is not specifically limited in this application. The sending device and the receiving device may be routers, switches, or the like. Only data exchange between a MAC layer (namely, a first MAC layer) and a PHY (namely, a first PHY) of the sending device and a MAC layer (namely, a second MAC layer) and a PHY (namely, a second PHY) of the receiving device is described herein, and data exchange between other layers is not described herein. FIG. 3 is applicable to a scenario in which a service is recovered after being suspended, and execution is as follows.

Step 301: The first MAC layer sends first indication information to the first PHY, where the first indication information indicates the sending device to send a service flow to the receiving device.

Before step 301 is performed, the sending device has obtained the service flow, and triggers, based on the service flow, the first MAC layer of the sending device to send the first indication information to the first PHY; or the sending device receives an indication message sent by an upper-layer device, where the indication message indicates that a service is recovered, so that the first MAC layer of the sending device sends the first indication information to the first PHY. A specific manner for triggering sending of the first indication information is not specifically limited in this application.

Specifically, the first indication information may be a data block in a service flow, or may be signaling (or a notification message), or the like. This is merely an example for description herein. A form of the first indication information is not specifically limited in this application.

Refer to FIG. 2A. It can be learned that a MAC layer includes an RS, and that the first MAC layer sends the first indication information to the first PHY may be understood as that an RS of a MAC chip sends the first indication information to a PCS of a PHY electrical chip through an MII. This is merely an example for description herein, and a transmission path of the first indication information is not specifically limited.

Step 302: The first PHY obtains a first indication code block based on the first indication information, where the first indication code block indicates the second PHY of the receiving device to be switched from a sleep state to an operating state, and indicates a second SerDes corresponding to the second PHY to be switched from a keepalive state to an operating state.

It should be noted that obtaining may be understood as generation, choosing, selection, or the like. For example, the first PHY generates the first indication code block based on the first indication information, or the first PHY selects (or chooses) an indication code block from pre-generated indication code blocks based on the first indication information as the first indication code block. This is not specifically limited in this application. When the first indication information is used to generate the first indication code block, encoding processing may be performed on the first indication information to obtain the first indication code block. When the first indication information is used to select the first indication code block, the first PHY may preselect and store a correspondence between indication information and an indication code block, and determine the first indication code block based on the obtained first indication information and the correspondence. This is merely an example for description herein.

In this application, the sleep state may be understood as a non-operating state, a state in which no service is processed, or a state in which transmission of a service flow is not performed, the operating state may be understood as a state in which transmission of a service flow is performed or a state in which a service is processed, and the keepalive state may be understood as a standby state. Once a service-related trigger message or instruction is received, the operating state is immediately recovered. The sleep state, the operating state, and the keepalive state in the following may be understood with reference to the descriptions herein.

It should be further noted that, the first PHY may switch, based on the first indication information, the first PHY from a sleep state to an operating state, and switch a first SerDes corresponding to the first PHY from a keepalive state to an operating state. The first PHY may directly adjust, based on the first indication information, the operating state of the first PHY and the operating state of the first SerDes corresponding to the first PHY; or may obtain the first indication code block based on the first indication information, and adjust, based on the first indication code block, the operating state of the first PHY and the operating state of the first SerDes corresponding to the first PHY. This is not specifically limited in this application. When recovering to operate, the first PHY switches, based on the first indication information, the first PHY from the sleep state to the operating state, and the first SerDes corresponding to the first PHY from the keepalive state to the operating state, so that quick response to service recovery can be ensured, and user experience can be improved.

In addition, the first SerDes corresponding to the first PHY (or the second SerDes corresponding to the second PHY) may be co-deployed in one chip with the PHY, or may be separately deployed in different chips with the PHY. This is not specifically limited in this application. Refer to FIG. 1. It can be learned that the PHY further includes a PCS, a PMA, a PMD, and the like. In addition, as mentioned in the foregoing descriptions of the SerDes, the SerDes is mainly configured to implement functions of the PMA and PMD in the PHY. An AUI of the PMA may be implemented through a SerDes, and a PMD connection medium may also be implemented through a SerDes. When the SerDes needs to be switched to an operating state, state switching may be performed on all SerDeses, or state switching may be performed on some SerDeses (for example, the SerDes implementing the AUI of the PMA is switched to an operating state, and state switching is not performed on the SerDes implementing the PMD connection medium). This is not specifically limited in this application. During actual application, the SerDes implementing the AUI of the PMA and the SerDes implementing the PMD connection medium may be implemented through two different chips, or may be implemented through a same chip. Refer to FIG. 2F. If a same chip is used for implementation, the SerDes implementing the AUI of the PMA and the SerDes implementing the PMD connection medium belong to two different hardware units. This is not specifically limited herein. The operating state switching of the SerDes in the following may be understood with reference to the descriptions herein. Details are not described in other parts.

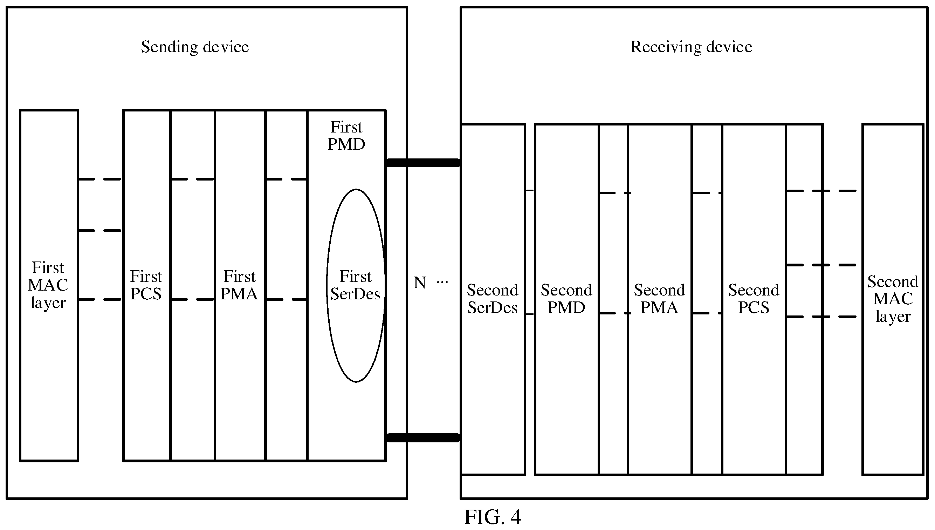

Descriptions are provided herein by using an example in which the first PHY includes a first PCS, a first PMA, and a first PMD, and the second PHY includes a second PCS, a second PMA, and a second PMD. As shown in FIG. 4, the first SerDes is disposed in the first PMD, and the second SerDes is not disposed in the second PMD. In other words, the SerDes that implements the function of the PMD may be disposed in a PHY chip, or may not be disposed in a PHY chip. Chips of the sending device and the receiving device shown in FIG. 4 are electrical chips. The first SerDes may be disposed in a PMD in the electrical chip, or the second SerDes and a PMD in the electrical chip may be disposed independently. Regardless of the disposition, the SerDeses are connected through an electrical interface. In addition, it should be further noted that, when the chips of the sending device and the receiving device are optical module chips, the first SerDes may be disposed in a PMD in the optical module chip, or the second SerDes and a PMD in the optical module chip may be disposed independently. Regardless of the disposition, the SerDeses are connected through an optical interface. If the SerDes is not disposed in the PMD, that the PHY is switched from the sleep state to the operating state includes that the PCS is switched from a sleep state to an operating state, the PMA is switched from a sleep state to an operating state, and the PMD is switched from a sleep state to an operating state. If the SerDes is disposed in the PMD, that the PHY is switched from the sleep state to the operating state means that the PCS is switched from a sleep state to an operating state and the PMA is switched from a sleep state to an operating state, and in this case, the PMD is switched from a keepalive state to an operating state.

In addition, when the first PHY includes the first PCS, the first PMA, and the first PMD, when step 302 is performed, the first PCS may switch, based on the first indication information, the first PCS from a sleep state to an operating state and obtain the first indication code block; the first PCS sends the first indication code block to the first PMA; and the first PMA switches the first PMA from a sleep state to an operating state based on the received first indication code block. Alternatively, the first PCS switches the first PCS from a sleep state to an operating state based on the first indication information, and sends the first indication information to the first PMA; and the first PMA switches, based on the received first indication information, the first PMA from a sleep state to an operating state, and obtains the first indication code block. Certainly, during actual application, the first PCS may switch the first PCS from the sleep state to the operating state based on the first indication information, and sends the first indication information to the first PMA; the first PMA switches the first PMA from the sleep state to the operating state based on the received first indication information, and sends the first indication information to the first PMD; and the first PMD may switch, based on the first indication information, from a sleep state (or a keepalive state) to an operating state and obtain the first indication code block. Regardless of which manner is used, it can be ensured that the first PHY is switched from the sleep state to the operating state, so that quick service recovery can be ensured, to improve data processing efficiency.

In addition, when the first SerDes is disposed in the first PMD, the first PHY may switch, based on the first indication information, the first PMD from the keepalive state to the operating state, and the first SerDes corresponding to the first PMD from a keepalive state to an operating state.

It should be further noted that the first PCS and the first PMA of the first PHY perform data transmission via logical lanes. A quantity of logical lanes may be flexibly set based on a service requirement. For example, a 100GE PHY includes four 25G PCS lanes. The first PMD performs data transmission via a physical lane. A quantity of physical lanes is limited and cannot be randomly increased. However, during actual service transmission, the logical lanes may be in one-to-one correspondence with the physical lanes. For example, one logical lane corresponds to one physical lane, or a plurality of logical lanes correspond to one physical lane, where for example, four logical lanes correspond to one physical lane. Generally, during data transmission, the sending device and the receiving device may predefine specific lanes to be used for data transmission. Certainly, when a data transmission lane is switched, the sending device may also send indication signaling in advance to the receiving device to notify the receiving device of the switched data transmission lane, and then perform data transmission. This is not specifically limited in this application. For a logical lane, a PCS lane is used as an example for description herein. The first PCS includes a plurality of PCS lanes. The first PCS switches the plurality of PCS lanes from a sleep state to an operating state. For example, 16 PCS lanes are configured for the first PCS, and all the 16 PCS lanes may be switched from the sleep state to the operating state. Alternatively, the first PCS switches a part of a plurality of first PCS lanes from a sleep state to an operating state based on a first service flow rate threshold. For example, if a service flow rate is represented by W, the first service flow rate threshold is represented by W1, and W is less than W1, 10 PCS lanes may be switched from the sleep state to the operating state. In addition, the first PCS may send the first indication code block via at least one of the plurality of first PCS lanes (if all the PCS lanes are switched from the sleep state to the operating state, the first indication code block is sent by using all the PCS lanes, for example, the first indication code block is sent by using 16 PCS lanes; or if some of the PCS lanes are switched from the sleep state to the operating state, the first indication code block is sent by using the some PCS lanes, where for example, the first indication code block is sent by using 10 PCS lanes), provided that it is ensured that the first PMA receives the first indication code block.

For a physical lane, a PMD lane is used as an example for description herein. The first PMD includes a plurality of first PMD lanes. The first PMD switches the plurality of first PMD lanes from a keepalive state to an operating state. For example, eight PMD lanes are configured for the first PMD, and all the eight PMD lanes may be switched from the keepalive state to the operating state. Alternatively, the first PMD switches a part of the plurality of PMD lanes from a keepalive state to an operating state based on the first service flow rate threshold. For example, if the service flow rate is represented by W, the first service flow rate threshold is represented by W1, and W is less than W1, three PMD lanes may be switched from the keepalive state to the operating state.

In addition, it should be further noted that, during actual application, a plurality of service flow rate thresholds may be set based on a requirement, and quantities of virtual lanes and logical lanes to be used for service data transmission are determined based on different service flow rate thresholds. For example, there are 20 PCS lanes, there are 16 PMD lanes, and the service flow rate thresholds are respectively represented by W1, W2, and W3 (W1>W2>W3). When the service flow rate is less than W1, 10 PCS lanes of the first PCS and three PMD lanes of the first PMD are used for service data transmission. When the service flow rate is greater than W1 and less than W2, 12 PCS lanes of the first PCS and four PMD lanes of the first PMD are used for service data transmission. When the service flow rate is greater than W2 and less than W3, 15 PCS lanes of the first PCS and six PMD lanes of the first PMD are used for service data transmission. This is merely an example for description, and does not constitute any specific limitation. The service flow rate threshold in the following may be understood with reference to the descriptions herein.

Step 303: The first PHY sends the first indication code block to the second PHY of the receiving device.

A length of the first indication code block may be 10 bits, 64 bits, 66 bits, 128 bits, or 130 bits. An example of 66-bit blocks is used. Table 1 shows a data structure of the 66-bit blocks, where HD represents a head (head) of the 66-bit blocks, a default value is 0x1, and M0 to M7 represent payloads of the 66-bit blocks.

**Table 1**

| 66-bit | HD | M0 | M1 | M2 | M3 | M4 | M5 | M6 | M7 |
|---|---|---|---|---|---|---|---|---|---|
| <0:65> | 0x1 | 0x3c | 0xd2 | 0x4d | 0xe1 | 0xac | 0x17 | 0xc3 | 0xd8 |

Step 304: The second PHY switches, based on the first indication code block, the second PHY from the sleep state to the operating state, and the second SerDes corresponding to the second PHY from the keepalive state to the operating state.

In addition, when the second PHY includes the second PCS, the second PMA, and the second PMD, when step 304 is performed, the second PMA may switch the second PMA from a sleep state to an operating state based on the first indication code block; the second PMA sends the first indication information to the second PCS (specifically, the second PMA may obtain the first indication information based on the first indication code block, for example, determine the first indication information based on a mapping relationship between an indication code block and indication information; or directly generate the first indication information based on the first indication code block, which is not specifically limited herein); and the second PCS receives the first indication information, and switches the second PCS from a sleep state to an operating state. Alternatively, the second PMA may switch the second PMA from a sleep state to an operating state based on the first indication code block; the second PMA sends the first indication code block to the second PCS; and the second PCS receives the first indication code block, and switches the second PCS from a sleep state to an operating state. Regardless of which manner is used, it can be ensured that the second PHY is switched from the sleep state to the operating state, so that quick service recovery can be ensured, to improve data processing efficiency.

In addition, when the second SerDes is disposed in the second PMD, the second PHY may switch, based on the first indication information or the first indication code block, the first PMD from a keepalive state to an operating state, and the second SerDes corresponding to the second PMD from a keepalive state to an operating state.

It should be further noted that, the second PCS and the second PMA of the second PHY perform data transmission via logical lanes, and a quantity of logical lanes may be flexibly set based on a service requirement. The second PMD performs data transmission via a physical lane. A quantity of physical lanes is limited and cannot be randomly increased. However, during actual service transmission, the logical lanes may be in one-to-one correspondence with the physical lanes. For example, one logical lane corresponds to one physical lane, or a plurality of logical lanes correspond to one physical lane, where for example, four logical lanes correspond to one physical lane. Generally, during data transmission, the sending device and the receiving device may predefine specific lanes to be used for data transmission. Certainly, when a data transmission lane is switched, the sending device may also send indication signaling in advance to the receiving device to notify the receiving device of the switched data transmission lane, and then perform data transmission. This is not specifically limited in this application. For a logical lane, a PCS lane is used as an example for description herein. The second PCS includes a plurality of second PCS lanes. The second PCS switches the plurality of second PCS lanes from a sleep state to an operating state. For example, 16 PCS lanes are configured for the second PCS, and all the 16 PCS lanes may be switched from the sleep state to the operating state. Alternatively, the second PCS switches a part of the plurality of second PCS lanes from a sleep state to an operating state based on a first service flow rate threshold. For example, if a service flow rate is represented by W, the first service flow rate threshold is represented by W1, and W is less than W1, 10 PCS lanes may be switched from the sleep state to the operating state.

For a physical lane, a PMA lane is used as an example for description herein. The second PMD includes a plurality of second PMD lanes. The second PMD switches the plurality of second PMD lanes from a keepalive state to an operating state. For example, eight PMD lanes are configured for the second PMD, and all the eight PMD lanes may be switched from the keepalive state to the operating state. Alternatively, the second PMD switches a part of the plurality of second PMD lanes from a keepalive state to an operating state based on the first service flow rate threshold. For example, if the service flow rate is represented by W, the first service flow rate threshold is represented by W1, and W is less than W1, three PMD lanes may be switched from the keepalive state to the operating state. In addition, it should be further noted that, during actual application, a plurality of service flow rate thresholds may be set based on a requirement, and quantities of logical lanes and physical lanes that are used for service data transmission are determined based on different service flow rate thresholds. For understanding, refer to the descriptions in step 303. Details are not described herein again.

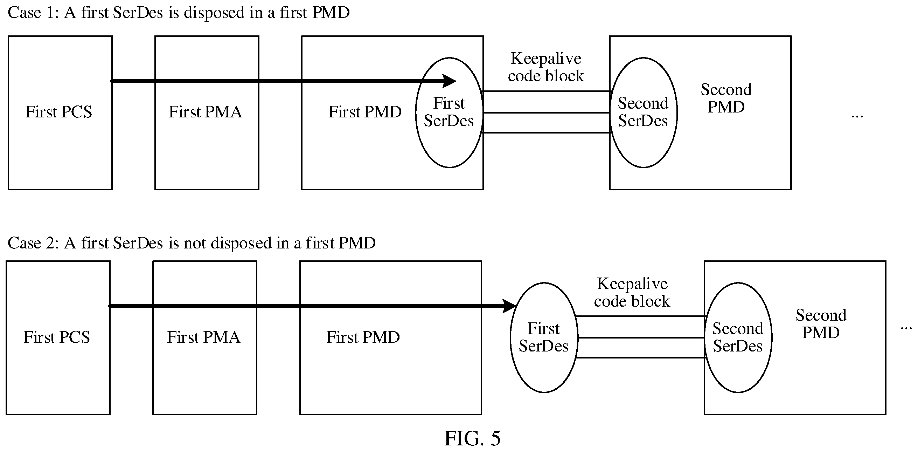

It should be further noted that, when the first SerDes and the second SerDes are in the keepalive state, the first PHY periodically sends a keepalive code block to the receiving device via the first SerDes, and the second PHY periodically receives the keepalive code block via the second SerDes. The keepalive code block does not include service information, and may be a pseudo random code block. For example, one keepalive code block is sent every 5 microseconds, and 10 keepalive code blocks may be sent. Data transmission of the keepalive code block may be understood with reference to FIG. 5. In Case 1, when the first SerDes is disposed in the first PMD, the keepalive code block enters the first SerDes in the first PMD after passing through the first PCS and the first PMA of the first PHY, and is transmitted to the second SerDes. The keepalive code block does not undergo data processing when passing through the first PCS and the first PMA, that is, does not undergo processing operations such as encoding and interleaving in FIG. 2A or FIG. 2B, and directly arrives at the first SerDes for data processing. In Case 2, when the first SerDes is not disposed in the first PMD, the keepalive code block enters the first SerDes after passing through the first PCS, the first PMA, and the first PMD of the first PHY, and is transmitted to the second SerDes. The keepalive code block does not undergo data processing when passing through the first PCS, the first PMA, and the first PMD, that is, does not undergo processing operations such as encoding and interleaving in FIG. 2A or FIG. 2B, and directly arrives at the first SerDes for data processing.

In this application, after receiving the first indication information from the MAC layer, the PHY of the sending device determines, based on the first indication information, that transmission of the service flow needs to be recovered, obtains the first indication code block based on the first indication information, and indicates the first indication code block to the receiving device, so that the receiving device performs state switching on the PHY based on the first indication code block, the PHY of the receiving device is switched from the sleep state to the operating state, and the SerDes corresponding to the PHY is switched from the keepalive state to the operating state. In this manner, when an Ethernet device does not operate, the PHY is in the sleep state, and the SerDes corresponding to the PHY is in the keepalive state, so that power consumption at the physical layer can be saved. Once a service is recovered, the Ethernet device may respond in a timely manner, the PHY is switched from the sleep state to the operating state, and the SerDes is switched from the keepalive state to the operating state. When service recovery is performed, the response is fast, and there is no need to buffer a large amount of service data during service recovery to wait for the Ethernet device recovers to operate. This can improve user experience, and improve data processing efficiency.

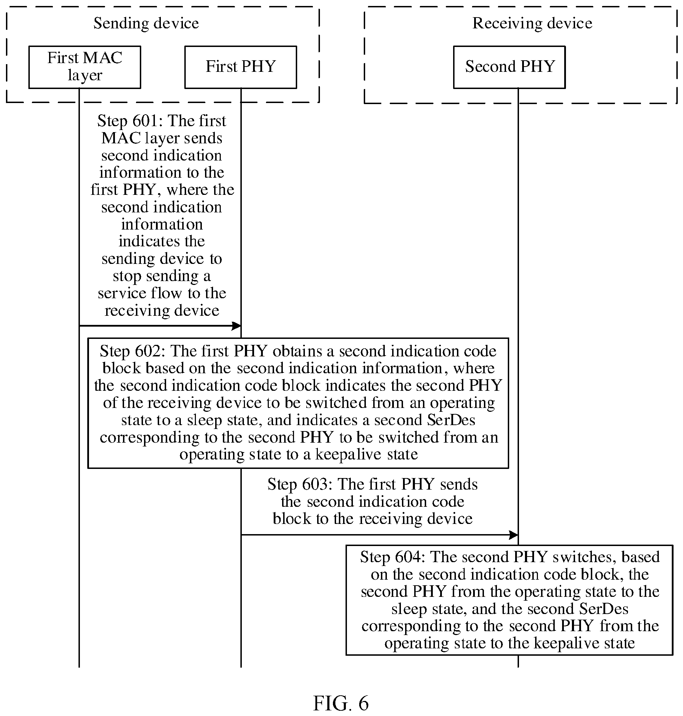

FIG. 6 is a schematic flowchart of a data processing method according to an embodiment of this application. The method may be performed through data exchange between a sending device and a receiving device. The sending device and the receiving device may be devices in the Ethernet, or may be devices in the super Ethernet. This is not specifically limited in this application. The sending device and the receiving device may be routers, switches, or the like. Only data exchange between a MAC layer (namely, a first MAC layer) and a PHY (namely, a first PHY) of the sending device and a MAC layer (namely, a second MAC layer) and a PHY (namely, a second PHY) of the receiving device is described herein, and data exchange between other layers is not described herein. FIG. 3 is applicable to a scenario in which a service is suspended, and execution is as follows.

Step 601: The first MAC layer sends second indication information to the first PHY, where the second indication information indicates the sending device to stop sending a service flow to the receiving device.

Before step 601 is performed, the sending device does not obtain the service flow within preset duration, for example, does not obtain the service flow within five seconds. Based on this, the first MAC layer of the sending device is triggered to send the second indication information to the first PHY; or the sending device receives an indication message sent by an upper-layer device, where the indication message indicates that a service is suspended, so that the first MAC layer of the sending device sends the second indication information to the first PHY. A specific manner for triggering sending of the second indication information is not specifically limited in this application.

Specifically, the second indication information may be signaling (or a notification message), or the like. This is merely an example for description herein. A form of the second indication information is not specifically limited in this application.

Refer to FIG. 2A. It can be learned that a MAC layer includes an RS, and that the first MAC layer sends the second indication information to the first PHY may be understood as that an RS of a MAC chip sends the second indication information to a PCS of a PHY electrical chip through an MII. This is merely an example for description herein, and a transmission path of the second indication information is not specifically limited.

Step 602: The first PHY obtains a second indication code block based on the second indication information, where the second indication code block indicates the second PHY of the receiving device to be switched from an operating state to a sleep state, and indicates a second SerDes corresponding to the second PHY to be switched from an operating state to a keepalive state.

It should be noted that obtaining may be understood as generation, choosing, selection, or the like. For example, the first PHY generates the second indication code block based on the second indication information, or the first PHY selects (or chooses) an indication code block from pre-generated indication code blocks based on the second indication information as the second indication code block. This is not specifically limited in this application. When the second indication information is used to generate the second indication code block, encoding processing may be performed on the second indication information to obtain the second indication code block. When the second indication information is used to select the second indication code block, the first PHY may preselect and store a correspondence between indication information and an indication code block, and determine the second indication code block based on the obtained second indication information and the correspondence. This is merely an example for description herein.

It should be further noted that, the first PHY may switch, based on the second indication information, the second PHY from an operating state to a sleep state, and a first SerDes corresponding to the first PHY from an operating state to a keepalive state. The first PHY may directly adjust, based on the second indication information, the operating state of the first PHY and the operating state of the first SerDes corresponding to the first PHY; or may obtain the second indication code block based on the second indication information, and adjust, based on the second indication code block, the operating state of the first PHY and the operating state of the first SerDes corresponding to the first PHY. This is not specifically limited in this application. When suspending operating, the first PHY switches, based on the second indication information, the first PHY from the operating state to the sleep state, and the first SerDes corresponding to the first PHY from the operating state to the keepalive state, so that quick response to service suspension can be ensured.

In addition, the first SerDes corresponding to the first PHY (or the second SerDes corresponding to the second PHY) may be co-deployed in one chip with the PHY, or may be separately deployed in different chips with the PHY. This is not specifically limited in this application.

Refer to FIG. 1. It can be learned that the PHY further includes a PCS, a PMA, a PMD, and the like. Descriptions are provided herein by using an example in which the first PHY includes a first PCS, a first PMA, and a first PMD, and the second PHY includes a second PCS, a second PMA, and a second PMD. If the SerDes is not disposed in the PMD, that the PHY is switched from the operating state to the sleep state includes that the PCS is switched from an operating state to a sleep state, the PMA is switched from an operating state to a sleep state, and the PMD is switched from an operating state to a sleep state. If the SerDes is disposed in the PMD, that the PHY is switched from the operating state to the sleep state means that the PCS is switched from an operating state to a sleep state, the PMA is switched from an operating state to a sleep state, and in this case, the PMD is switched from an operating state to a keepalive state.

In addition, when the first PHY includes the first PCS, the first PMA, and the first PMD, when step 602 is performed, the first PCS may switch, based on the second indication information, the first PCS from an operating state to a sleep state and obtain the second indication code block; the first PCS sends the second indication code block to the first PMA; and the first PMA switches the first PMA from an operating state to a sleep state based on the received second indication code block. Alternatively, the first PCS switches the first PCS from an operating state to a sleep state based on the second indication information, and sends the second indication information to the first PMA; and the first PMA switches, based on the received second indication information, the first PMA from an operating state to a sleep state, and obtains the second indication code block. Certainly, during actual application, the first PCS may switch the first PCS from the operating state to the sleep state based on the second indication information, and sends the second indication information to the first PMA; the first PMA switches the first PMA from the operating state to the sleep state based on the received second indication information, and sends the second indication information to the first PMD; and the first PMD may switch, based on the second indication information, from an operating state to a sleep state (or a keepalive state) and obtain the second indication code block. Regardless of which manner is used, it can be ensured that the first PHY is switched from the operating state to the sleep state, so that quick service suspension can be ensured.

In addition, when the first SerDes is disposed in the first PMD, the first PHY may switch, based on the second indication information, the first PMD from the operating state to the keepalive state, and the first SerDes corresponding to the first PMD from an operating state to a keepalive state.

It should be further noted that the first PCS and the first PMA of the first PHY perform data transmission via logical lanes. A quantity of logical lanes may be flexibly set based on a service requirement. For example, a 100GE PHY includes two 50G PMA lanes. The first PMD performs data transmission via a physical lane. A quantity of physical lanes is limited and cannot be randomly increased. However, during actual service transmission, the logical lanes may be in one-to-one correspondence with the physical lanes. For example, one logical lane corresponds to one physical lane, or a plurality of logical lanes correspond to one physical lane, where for example, four logical lanes correspond to one physical lane. Generally, during data transmission, the sending device and the receiving device may predefine specific lanes to be used for data transmission. Certainly, when a data transmission lane is switched, the sending device may also send indication signaling in advance to the receiving device to notify the receiving device of the switched data transmission lane, and then perform data transmission. This is not specifically limited in this application. For a logical lane, a PCS lane is used as an example for description herein. The first PCS includes a plurality of first PCS lanes. The first PCS switches the plurality of first PCS lanes from an operating state to a sleep state. For example, 16 PCS lanes are configured for the first PCS, and all the 16 PCS lanes may be switched from the operating state to the sleep state. Alternatively, the first PCS switches a part of the plurality of first PCS lanes from an operating state to a sleep state based on a second service flow rate threshold. For example, if a service flow rate is represented by S, the second service flow rate threshold is represented by S1, and S is less than S1, 10 PCS lanes may be switched from the operating state to the sleep state. In addition, the first PCS may send the second indication code block via at least one of the plurality of first PCS lanes (if all the first PCS lanes are switched from the operating state to the sleep state, the second indication code block is sent by using all the first PCS lanes, where for example, the second indication code block is sent by using 16 PCS lanes; or if some of the PCS lanes are switched from the sleep state to the operating state, the second indication code block is sent by using the some PCS lanes, where for example, the second indication code block is sent by using 10 PCS lanes), provided that it is ensured that the first PMA receives the second indication code block.

For a physical lane, a PMD lane is used as an example for description herein. The first PMD includes a plurality of first PMD lanes. The first PMD switches the plurality of first PMD lanes from an operating state to a keepalive state. For example, eight PMD lanes are configured for the first PMD, and all the eight PMD lanes may be switched from the operating state to the keepalive state. Alternatively, the first PMD switches a part of the plurality of PMD lanes from an operating state to a keepalive state based on the second service flow rate threshold. For example, if the service flow rate is represented by S, the second service flow rate threshold is represented by S1, and S is less than S1, three PMD lanes may be switched from the operating state to the keepalive state.

Step 603: The first PHY sends the second indication code block to the receiving device.

A length of the second indication code block may be 10 bits, 64 bits, 66 bits, 128 bits, or 130 bits. An example of 66-bit blocks is used. For understanding, refer to Table 1. Details are not described herein again.

Step 604: The second PHY switches, based on the second indication code block, the second PHY from the operating state to the sleep state, and the second SerDes corresponding to the second PHY from the operating state to the keepalive state.

In addition, when the second PHY includes the second PCS, the second PMA, and the second PMD, when step 604 is performed, the second PMA may switch the second PMA from an operating state to a sleep state based on the second indication code block; the second PMA sends the second indication information to the second PCS (specifically, the second PMA may obtain the second indication information based on the second indication code block, for example, determine the second indication information based on a mapping relationship between an indication code block and indication information; or directly generate the second indication information based on the second indication code block, which is not specifically limited herein); and the second PCS receives the second indication information, and switches the second PCS from an operating state to a sleep state. Alternatively, the second PMA may switch the second PMA from an operating state to a sleep state based on the second indication code block; the second PMA sends the second indication code block to the second PCS; and the second PCS receives the second indication code block, and switches the second PCS from an operating state to a sleep state. Regardless of which manner is used, it can be ensured that the second PHY is switched from the operating state to the sleep state, so that quick service suspension can be ensured.

In addition, when the second SerDes is disposed in the second PMD, the second PHY may switch, based on the second indication information or the second indication code block, the first PMD from the operating state to the keepalive state, and the second SerDes corresponding to the second PMD from the operating state to the keepalive state.

It should be further noted that, the second PCS and the second PMA of the second PHY perform data transmission via logical lanes, and a quantity of logical lanes may be flexibly set based on a service requirement. The second PMD performs data transmission via a physical lane. A quantity of physical lanes is limited and cannot be randomly increased. However, during actual service transmission, the logical lanes may be in one-to-one correspondence with the physical lanes. For example, one logical lane corresponds to one physical lane, or a plurality of logical lanes correspond to one physical lane, where for example, four logical lanes correspond to one physical lane. Generally, during data transmission, the sending device and the receiving device may predefine specific lanes to be used for data transmission. Certainly, when a data transmission lane is switched, the sending device may also send indication signaling in advance to the receiving device to notify the receiving device of the switched data transmission lane, and then perform data transmission. This is not specifically limited in this application. For a logical lane, a PCS lane is used as an example for description herein. The second PCS includes a plurality of second PCS lanes. The second PCS switches the plurality of second PCS lanes from an operating state to a sleep state. For example, 16 PCS lanes are configured for the second PCS, and all the 16 PCS lanes may be switched from the operating state to the sleep state. Alternatively, the second PCS switches a part of the plurality of second PCS lanes from an operating state to a sleep state based on a second service flow rate threshold. For example, if a service flow rate is represented by S, the second service flow rate threshold is represented by S1, and S is less than S1, 10 PCS lanes may be switched from the sleep state to the operating state. In addition, the second PCS receives the second indication information via at least one of the plurality of second PCS lanes. If all the 16 PCS lanes are switched from the operating state to the sleep state, the second indication information is received via the 16 PCS lanes. If all the 10 PCS lanes are switched from the sleep state to the operating state, the second indication information may be received via the 10 PCS lanes.

For a physical lane, a PMD lane is used as an example for description herein. The second PMD includes a plurality of second PMD lanes. The second PMD switches the plurality of second PMD lanes from an operating state to a keepalive state. For example, eight PMD lanes are configured for the second PMD, and all the eight PMD lanes may be switched from the operating state to the keepalive state. Alternatively, the second PMD switches a part of the plurality of second PMD lanes from an operating state to a keepalive state based on the second service flow rate threshold. For example, if the service flow rate is represented by S, the second service flow rate threshold is represented by S1, and S is less than S1, three PMD lanes may be switched from the operating state to the keepalive state. In addition, it should be further noted that, during actual application, a plurality of service flow rate thresholds may be set based on a requirement, and quantities of logical lanes and physical lanes that are used for service data transmission are determined based on different service flow rate thresholds. For understanding, refer to the descriptions in step 303. Details are not described herein again.

In this application, after receiving the second indication information from the MAC layer, the PHY of the sending device determines, based on the second indication information, that transmission of the service flow needs to be stopped, obtains the second indication code block based on the second indication information, and indicates the second indication code block to the receiving device, so that the receiving device performs state switching of the PHY based on the second indication code block, the PHY of the receiving device is switched from the operating state to the sleep state, and the SerDes corresponding to the PHY is switched from the operating state to the keepalive state. In this manner, when an Ethernet device does not operate, a PHY is in a sleep state, and a SerDes corresponding to the PHY is in a keepalive state, so that power consumption at the physical layer can be saved.

To better describe the solutions of this application, the following describes data processing logic during service recovery and service suspension in two different cases: a low bit error rate (NO FEC) and a high bit error rate (FEC exists). Details are described as follows.

**Case 1:** For a scenario in which an Ethernet physical link has a low bit error rate (NO FEC) and the rate is less than or equal to 100G, for example, application of NRZ physical links having rates such as 10G/25G/40G (4*10G)/50G (2*25G)/100G (4*25G)

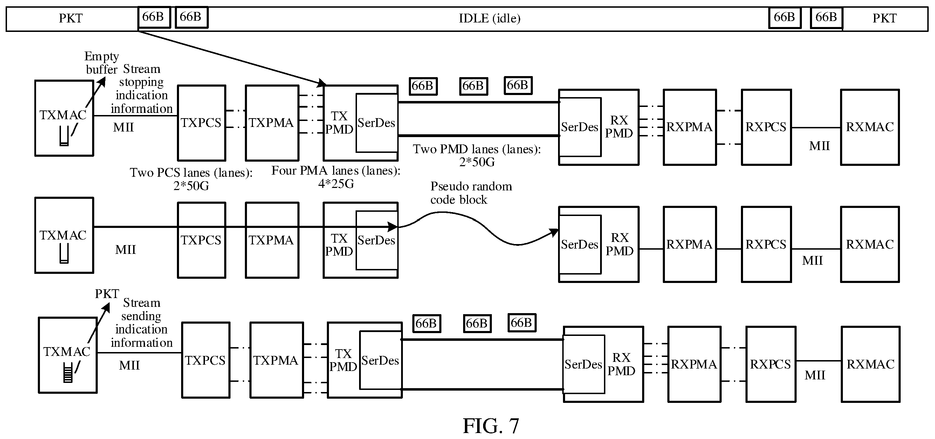

FIG. 7 is a diagram of a service processing procedure from data stream stopping to data recovery. A 100GE PHY is used as an example for description. A sending device (TX) and a receiving device (RX) in the figure are described by using an example in which a SerDes is disposed in a PMD of a PHY. PKT indicates time in which service data transmission exists, and IDLE indicates time in which service data transmission does not exist. A MAC layer of the TX detects that there is no service packet (that is, a buffer is empty), performs transmission of only an IDLE bit stream (namely, an idle service bit stream), generates stream stopping indication information (namely, the foregoing second indication information), and transmits the stream stopping indication information to a PCS (specifically, an RS of the MAC layer transmits the stream stopping indication information through an MII). The stream stopping indication information may be a notification message or the like, and may be understood with reference to the second indication information. The stream stopping indication information may alternatively be a low-power bit stream or a bit stream with normal power consumption. This is not specifically limited in this application. The PCS generates a stream stopping code block (namely, the second indication code block) based on a stream stopping indication. The stream stopping code block is described by using 66-bit blocks as an example. A time interval of the stream stopping code block may be set based on a service requirement. If a stream stopping operation needs to be performed quickly, the time interval may be set to 5 milliseconds. If a stream stopping operation does not need to be performed too quickly, the time interval may be set to 10 milliseconds. This is merely an example for description, and does not constitute a specific limitation. There may be a plurality of stream stopping code blocks, to ensure that the RX can receive a stream stopping code block. A specific quantity of stream stopping code blocks is not specifically limited in this application. The PCS may transmit the stream stopping code block to a PMA through a PCS lane (where a logical lane is shown by using a dash-dot line in FIG. 7, and two 50G PCS lanes are used as an example for description in FIG. 7). The PMA transmits the stream stopping code block to a PMD through a PMA lane (where four 25G PMA lanes are used as an example for description in FIG. 7). The PMD transmits the stream stopping code block to a PMD of the RX through a PMD lane (where in FIG. 7, two 50G PMD lanes are used as an example for description, and a physical lane is shown by using a solid line). The PMD of the RX transmits the stream stopping code block to a PMA through a PMA lane (where four 25G PMA lanes are used as an example for description in FIG. 7). The PMA performs identification in a fuzzy matching manner. If a quantity of received stream stopping code blocks exceeds a predefined stream stopping threshold, it is determined that the detected code block is a valid stream stopping indication. The PMA may convert the stream stopping code block into stream stopping indication information, and transmit the stream stopping indication information to a PCS through a PCS lane (where in FIG. 7, two 50G PCS lanes are used as an example for description), and the PCS transmits the stop stream indication information to a MAC layer through an MII. Then, the PCS and the PMA of the TX and the PCS and the PMA of the RX are switched from an operating state to a sleep state, the PMD of the TX and the PMD of the RX are switched from an operating state to a keepalive state, and SerDeses of the PMDs are also switched from an operating state to a keepalive state. In addition, the PMA of the TX may generate a pseudo random code block (namely, a keepalive code block, for example, a pseudo random code block or a scrambled IDLE code block) based on a stream stopping indication code block, and perform transmission of the pseudo random code block between the SerDes of the TX and the SerDes of the RX, to ensure that the SerDeses are in the keepalive state. Once a service is recovered, the SerDeses can respond and recover service transmission in a timely manner.

In addition, once a service of the sending device is recovered, the MAC layer of the TX detects a service packet, generates stream sending indication information (namely, the first indication information), and transmits the stream sending indication information to the PCS. The stream sending indication information may be a notification message or the like, and may be understood with reference to the first indication information. The stream sending indication information may be a low-power bit stream or a bit stream with normal power consumption. This is not specifically limited in this application. The PCS generates a stream sending code block (namely, a first indication code block) based on a stream sending indication. The stream sending code block is described by using 66-bit blocks as an example. A time interval of the stream sending code block may be set based on a service requirement. If a stream stopping and service flow recovery operation needs to be performed quickly, the time interval may be set to 5 milliseconds. If quick recovery is not needed, the time interval may be set to 10 milliseconds. There may be a plurality of stream sending code blocks, to ensure that the RX can receive a stream stopping code block. A specific quantity of stream stopping code blocks is not specifically limited in this application. The PCS may transmit the stream sending code block to the PMA through a PCS lane. The PMA transmits the stream sending code block to the PMD through a PMA lane. The PMD transmits the stream sending code block to the PMD of the RX through a PMD lane. The PMD of the RX transmits the stream sending code block to the PMA through a PMA lane. The PMA performs identification in a fuzzy matching manner. If a quantity of received stream sending code blocks exceeds a predefined service flow recovery threshold, it is determined that the detected code block is a valid stream sending indication. The PMA may convert the stream sending code block into the stream sending indication information, and transmit the stream sending indication information to the PCS through a PCS lane, and the PCS transmits the stop stream indication information to a MAC layer through a PCS lane. Then, the PCS and the PMA of the TX and the PCS and the PMA of the RX are switched from the sleep state to the operating state, the PMD of the TX and the PMD of the RX are switched from the keepalive state to the operating state, and the SerDeses of the PMD are also switched from the keepalive state to the operating state.

**Case 2:** For a scenario in which an Ethernet physical link PAM4 (where a bit error rate is increased, and an FEC error correction code is included) has a rate greater than or equal to 50G, for example, application of PAM4 physical links having rates such as 50G (1*50G)/100G (2*50G)/200G (4*50G/2*100G)/400G (8*50G/4*100G)

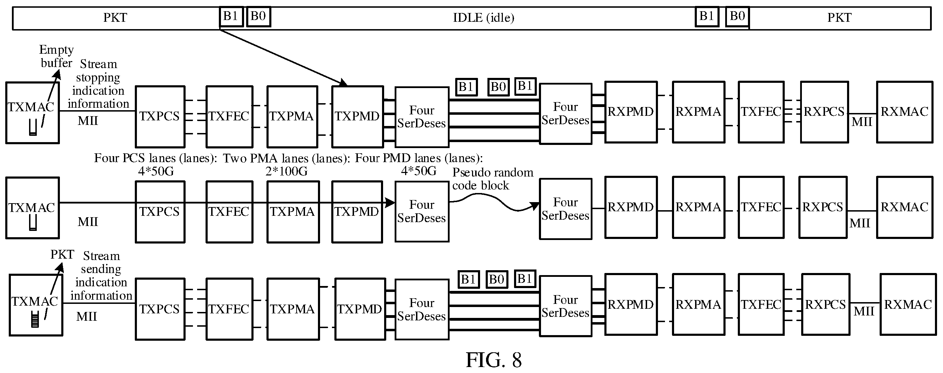

FIG. 8 is a diagram of a service processing procedure from data stream stopping to data recovery. A 200GE PHY is used as an example for description. A sending device (TX) and a receiving device (RX) in the figure are described by using an example in which a SerDes is not disposed in a PMD of a PHY. PKT indicates time in which service data transmission exists, and IDLE indicates time in which service data transmission does not exist. A MAC layer of the TX detects that there is no service packet, performs transmission of only an IDLE bit stream (namely, an idle service bit stream), generates stream stopping indication information (namely, the foregoing second indication information), and transmits the stream stopping indication information to a PCS (specifically, an RS of the MAC layer transmits the stream stopping indication information through an MII). The stream stopping indication information may be a notification message or the like, and may be understood with reference to the second indication information. The stream stopping indication information may be a low-power bit stream or a bit stream with normal power consumption. This is not specifically limited in this application. The PCS generates a stream stopping code block (namely, a second indication code block) based on a stream stopping indication. For example, the stream stopping code block is of a pattern of N*(8-bit to 64-bit blocks) (where N is a natural number, and N=1 to 8, or the like). The pattern may be a combination of a plurality of patterns (8-bit to 64-bit) with intervals, and a size and an interval of each pattern may be defined, for example, a pattern using a symbol (10-bit) as an interval, a pattern using a 64-bit block as an interval, or a codeword (2720/5280/5440-bit) is used as a boundary. B0 and B1 are used as an example in FIG. 8, where B0 is separated by a plurality of blocks B1. There may be a plurality of stream stopping code blocks, to ensure that the RX can receive a stream stopping code block. A specific quantity of stream stopping code blocks is not specifically limited in this application. The PCS may transmit the stream stopping code block to an FEC layer through a PCS lane (where four 50G PCS lanes are used as an example for description in FIG. 8), and the FEC layer transmits the stream stopping code block to a PMA through a virtual lane. The PMA transmits the stream stopping code block to a PMD through a PMA lane (where two 100G PMA lanes are used as an example for description in FIG. 8). The PMD transmits the stream stopping code block to a SerDes of the TX through a physical lane (where in FIG. 8, four 50G PMD lanes are used as an example for description, and a physical lane is shown by using a solid line). Because physical lanes are in one-to-one correspondence with SerDeses, four physical lanes correspond to four SerDeses, and transmission of the stream stopping code block is performed between the SerDes of the TX and a SerDes of the RX. Then, the stream stopping code block is transmitted to a PMD of the RX. The PMD of the RX transmits the stream stopping code block to a PMA through a PMA lane (where two 100G PMA lanes are used as an example for description in FIG. 8). The PMA performs identification in a fuzzy matching manner. If a quantity of received stream stopping code blocks exceeds a predefined stream stopping threshold, it is determined that the detected code block is a valid stream stopping indication. The PMA may convert the stream stopping code block into the stream stopping indication information, transmit the stream stopping indication information to an FEC layer through a PCS lane (where in FIG. 8, four 50G PCS lanes are used as an example for description), and transmit the stream stopping indication information to the PCS. The PCS transmits the stop stream indication information to a MAC layer through an MII. Then, the PCS, the PMA, and the PMD of the TX and the PCS, the PMA, and the PMD of the RX are switched from an operating state to a sleep state, and the SerDes of the TX and the SerDes of the RX are also switched from an operating state to a keepalive state. In addition, the PMA of the TX may generate a pseudo random code block (namely, a keepalive code block, for example, a pseudo random code block or a scrambled IDLE code block) based on a stream stopping indication code block, and perform transmission of the pseudo random code block between the SerDes of the TX and the SerDes of the RX, to ensure that the SerDeses are in the keepalive state. Once a service is recovered, the SerDeses can respond and recover service transmission in a timely manner.

In addition, once a service of the sending device is recovered, the MAC layer of the TX detects a service packet, generates stream sending indication information (namely, the first indication information), and transmits the stream sending indication information to the PCS. The stream sending indication information may be a notification message or the like, and may be understood with reference to the first indication information. The stream sending indication information may be a low-power bit stream or a bit stream with normal power consumption. This is not specifically limited in this application. The PCS generates a stream sending code block (namely, the first indication code block) based on a stream sending indication. For example, the stream sending code block is of a pattern of N*(8-bit to 64-bit blocks) (where N is a natural number, and N=1 to 8, or the like). The pattern may be a combination of a plurality of patterns (8-bit to 64-bit) with intervals, and a size and an interval of each pattern may be defined, for example, a pattern using a symbol (10-bit) as an interval, a pattern using a 64-bit block as an interval, or a codeword (2720/5280/5440-bit) is used as a boundary. B0 and B1 are used as an example in FIG. 8, where B0 is separated by a plurality of blocks B1. There may be a plurality of stream sending code blocks, to ensure that the RX can receive a stream stopping code block. A specific quantity of stream sending code blocks is not specifically limited in this application. The PCS may transmit the stream sending code block to the FEC layer through a PCS lane, and then transmit the stream sending code block to the PMA. The PMA transmits the stream sending code block to the PMD through a PMA lane (where in FIG. 8, six PMA lanes are used as an example for description). The PMD transmits the stream sending code block to the SerDes of the TX through a physical lane, and transmission of the stream stopping code block is performed between the SerDes of the TX and the SerDes of the RX. Then, the stream sending code block is transmitted to the PMD of the RX. The PMD of the RX transmits the stream sending code block to the PMA through a PMA lane. The PMA performs identification in a fuzzy matching manner. If a quantity of received stream sending code blocks exceeds a predefined service flow recovery threshold, it is determined that the detected code block is a valid stream sending indication. The PMA may convert the stream sending code block into the stream sending indication information, transmit the stream sending indication information to the FEC layer through a PCS lane, and then transmit the stream sending indication information to the PCS. The PCS transmits the stop stream indication information to the MAC layer through an MII. Then, the PCS and the PMA of the TX and the PCS and the PMA of the RX are switched from the sleep state to the operating state, the PMD of the TX and the PMD of the RX are switched from the keepalive state to the operating state, and the SerDeses of the PMD are also switched from the keepalive state to the operating state.

When the data processing method in this application is used, data recovery time is short in different scenarios. For understanding, refer to the following Table 2 to Table 4. Table 2 shows a scenario with NO FEC and a link of NRZ (where a bit error rate is low). A 2*66-bit block is used for correspondingly sending a stream stopping indication and a traffic recovery indication, a sending interval is 0 bits, needed traffic recovery time, namely, service traffic recovery time, is usually at a nanosecond level, and user experience is good. For example, a SerDes rate is 10.3125 Gbps, a PHY rate is 10G, an operating mode (namely, an interface data bearing capacity) is 1*10G, the stream sending code block and the stream stopping code block are both 66-bit blocks, both a quantity of stream stopping times and a quantity of stream sending times are 2, a quantity of virtual lanes is 1, a size of data carried on each virtual lane is 1*66+1*66 bits, an interval between stream stopping and stream sending is 0 bits (that is, there is no interval between stream stopping and stream sending, namely, a "back-to-back" transmission mode), and time needed for responding to service traffic recovery is 12.8 ns.

**Table 2**

| Scenario | SerDes rate (Gbps) | PHY rate | Operating mode | Sizes of the stream stopping code block and the stream sending code block (bit) | Quantities of stream stopping times and stream sending times | Quantity of virtual lanes | Size of each virtual lane (bit) | Interval between stream stopping and stream sending (bit) | Traffic recovery response time (ns) |
|---|---|---|---|---|---|---|---|---|---|
| NO FEC+NRZ | 10.3125 | 10G | 1*10G | 66 | 2 | 1 | 1*66+ 1*66 | 0 | 12.8 |
| NO FEC+NRZ | 10.3125 | 40G | 4*10G | 4*66 | 2 | 4 | 1*66+ 1*66 | 0 | 12.8 |
| NO FEC+NRZ | 25.78125 | 25G | 1*25G | 2*66 | 2 | 1 | 1*66+ 1*66 | 0 | 5.12 |
| NO FEC+NRZ | 25.78125 | 50G | 2*25G | 2*66 | 2 | 2 | 1*66+ 1*66 | 0 | 5.12 |
| NO FEC+NRZ | 25.78125 | 100G | 4*25G | 4*66 | 2 | 4 | 1*66+ 1*66 | 0 | 5.12 |

Table 3 shows a scenario in which there is an FEC and a link is NRZ (where a bit error rate is low). A 2*64-bit block is used for correspondingly sending a stream stopping indication and a traffic recovery indication, a sending interval is 0 bits, and needed traffic recovery time is shown in Table 3. For example, a SerDes rate is 25.78125 Gbps, a PHY rate is 50G, an operating mode (namely, an interface data bearing capacity) is 2*25G, the stream sending code block and the stream stopping code block are both 2*64-bit blocks, both a quantity of stream stopping times and a quantity of stream sending times are 2, a quantity of virtual lanes is 2, a size of data carried on each virtual lane is 1*64+1*64 bits, an interval between stream stopping and stream sending is 0 bits, and time needed for responding to service traffic recovery is 4.96 ns.

**Table 3**

| Scenario | SerDes rate (Gbps) | PHY rate | Operating mode | Sizes of the stream stopping code block and the stream sending code block (bit) | Quantities of stream stopping times and stream sending times | Quantity of virtual lanes | Size of each virtual lane (bit) | Interval between stream stopping and stream sending (bit) | Traffic recovery response time (ns) |
|---|---|---|---|---|---|---|---|---|---|
| FEC+NRZ | 25.78125 | 25G | 1*25G | 2*64 | 2 | 1 | 1*64+1* 64 | 0 | 4.96 |
| FEC+NRZ | 25.78125 | 50G | 2*25G | 2*64 | 2 | 2 | 1*64+1* 64 | 0 | 4.96 |
| FEC+NRZ | 25.78125 | 100G | 4*25G | 4*64 | 2 | 4 | 1*64+1* 64 | 0 | 4.96 |
| FEC+NRZ | 26.5625 | 200G | 8*25G | 8*64 | 2 | 8 | 1*64+1* 64 | 0 | 4.82 |
| FEC+NRZ | 26.5625 | 400G | 16*25G | 16*64 | 2 | 16 | 1*64+1* 64 | 0 | 4.82 |

Table 4 shows a scenario in which there is an FEC and a link is PAM4 (where a bit error rate is low). A (2+2)*64-bit block (to ensure reliability) is used for correspondingly sending a stream stopping indication and a traffic recovery indication, a sending interval is 2*64 bits (where a size of the block and a size of the interval may be adjusted based on reliability requirements), and needed traffic recovery time is shown in Table 4. For example, a SerDes rate is 53.125 Gbps, a PHY rate is 200G, an operating mode (namely, an interface data bearing capacity) is 8*25G, the stream sending code block and the stream stopping code block are both 32*64-bit blocks, both a quantity of stream stopping times and a quantity of stream sending times are 2, a quantity of virtual lanes is 8, a size of data carried on each virtual lane is 2*64+2*64 bits, an interval between stream stopping and stream sending is 2*64 bits (in other words, the interval between stream stopping and stream sending is transmission duration occupied by the 2*64 bits), and time needed for responding to service traffic recovery is 14.46 ns.

**Table 4**

| Scenario | SerDes rate (Gbps) | PHY rate | Operating mode | Sizes of the stream stopping code block and the stream sending code block (bit) | Quantities of stream stopping times and stream sending times | Quantity of virtual lanes | Size of each virtual lane (bit) | Interval between stream stopping and stream sending (bit) | Traffic recovery response time (ns) |
|---|---|---|---|---|---|---|---|---|---|
| FEC+PAM4 | 53.125 | 50G | 2*25G | 8*64 | 2 | 2 | 2*64+ 2*64 | 2*64 | 14.46 |
| FEC+PAM4 | 53.125 | 100G | 4*25G | 16*64 | 2 | 4 | 2*64+ 2*64 | 2*64 | 14.46 |
| FEC+PAM4 | 53.125 | 200G | 8*25G | 32*64 | 2 | 8 | 2*64+ 2*64 | 2*64 | 14.46 |
| FEC+PAM4 | 53.125 | 400G | 16*25G | 64*64 | 2 | 16 | 2*64+ 2*64 | 2*64 | 14.46 |
| FEC+PAM4 | 53.125 | 800G | 32*25G | 128*64 | 2 | 32 | 2*64+ 2*64 | 2*64 | 14.46 |

It should be noted that, in the solution of this application, if a traffic service occupies 50% of average bandwidth, a total power consumption gain of PHY logic may be reduced by about 35%; if a traffic service occupies 25% of average bandwidth, a total power consumption gain of PHY logic may be reduced by about 60%; or if a traffic service occupies 10% of average bandwidth, a total power consumption gain of PHY logic may be reduced by about 75%.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

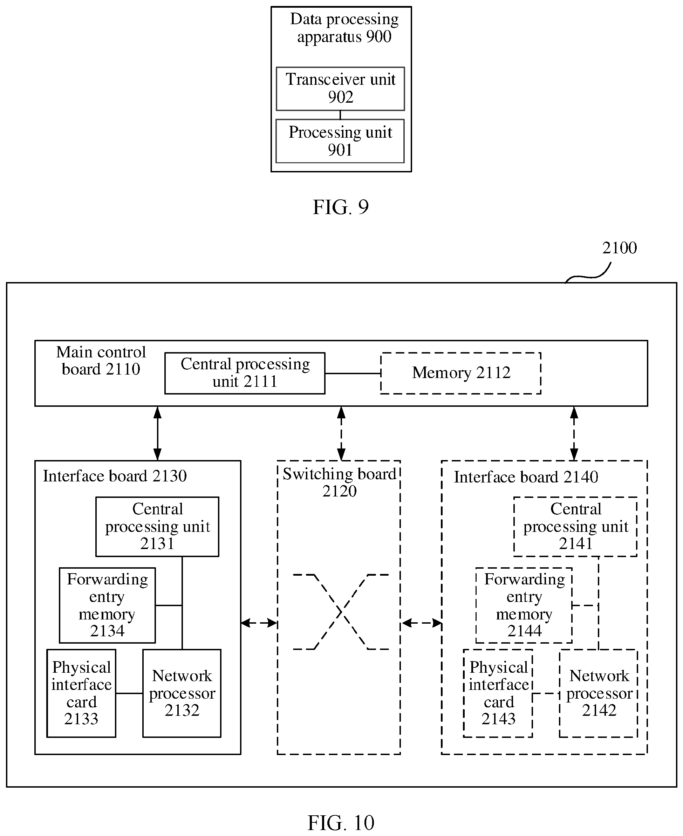

When the integrated unit is used, FIG. 9 is a possible example block diagram of a data processing apparatus according to an embodiment of this application. As shown in FIG. 9, the data processing apparatus 900 may include a processing unit 901 and a transceiver unit 902. The processing unit 901 is configured to control and manage an action of the data processing apparatus 900. The transceiver unit 902 is configured to support the data processing apparatus 900 in communicating with another device. Optionally, the transceiver unit 902 may include a receiving unit and/or a sending unit, configured to perform a receiving operation and a sending operation, respectively. Optionally, the data processing apparatus 900 may further include a storage unit, configured to store program code and/or data of the data processing apparatus 900. The transceiver unit may be referred to as an input/output unit, a communication unit, or the like, and the transceiver unit may be a transceiver. The processing unit may be a processor. When the image processing apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the data processing apparatus may be the foregoing sending device or receiving device. This is not specifically limited in this application.

In an embodiment, the data processing apparatus is a sending device, the sending device includes a first MAC layer and a first PHY, and the sending device includes a transceiver unit 902 and a processing unit 901. The transceiver unit 902 is configured to receive, through the first PHY, first indication information from the first MAC layer, where the first indication information indicates the sending device to send a service flow to a receiving device. The processing unit 901 is configured to obtain, through the first PHY, a first indication code block based on the first indication information, where the first indication code block indicates a second PHY of the receiving device to be switched from a sleep state to an operating state, and indicates a second SerDes corresponding to the second PHY to be switched from a keepalive state to an operating state. The transceiver unit 902 is further configured to send, through the first PHY, the first indication code block to the receiving device.

In an optional manner, the processing unit 901 is further configured to switch, through the first PHY based on the first indication information, the first PHY from a sleep state to an operating state, and switch a first SerDes corresponding to the first PHY from a keepalive state to an operating state.

In an optional manner, the first PHY includes a first PCS and a first PMA, and that the first PHY is switched from the sleep state to the operating state includes: The first PCS is switched from a sleep state to an operating state, and the first PMA is switched from a sleep state to an operating state.

In an optional manner, the transceiver unit 902 is further configured to receive, through the first PHY, second indication information from the first MAC layer, where the second indication information indicates the sending device to stop sending a service flow to a receiving device. The processing unit 901 is further configured to obtain, through the first PHY, a second indication code block based on the second indication information, where the second indication code block indicates the second PHY of the receiving device to be switched from the operating state to the sleep state, and indicates the second SerDes corresponding to the second PHY to be switched from the operating state to the keepalive state. The transceiver unit 902 is further configured to send, through the first PHY, the second indication code block to the receiving device.

In an optional manner, the processing unit 901 is configured to switch, through the first PHY based on the second indication information, the first PHY from the operating state to the sleep state, and switch the first SerDes corresponding to the first PHY from the operating state to the keepalive state.

In an optional manner, the first PHY includes the first PCS and the first PMA, and that the first PHY is switched from the operating state to the sleep state includes: The first PCS is switched from the operating state to the sleep state, and the first PMA is switched from the operating state to the sleep state.

In an optional manner, the processing unit 901 is specifically configured to switch, through the first PCS based on the first indication information, the first PCS from the sleep state to the operating state, and obtain the first indication code block; the transceiver unit 902 is specifically configured to send, through the first PCS, the first indication code block to the first PMA; and the processing unit 901 is specifically configured to switch, through the first PMA, the first PMA from the sleep state to the operating state based on the received first indication code block.

In an optional manner, the processing unit 901 is specifically configured to switch, through the first PCS, the first PCS from the sleep state to the operating state based on the first indication information, and send the first indication information to the first PMA; and the processing unit 901 is specifically configured to switch, through the first PMA based on the received first indication information, the first PMA from the sleep state to the operating state, and obtain the first indication code block.

In an optional manner, the processing unit 901 is specifically configured to switch, through the first PCS based on the second indication information, the first PCS from the operating state to the sleep state, and obtain the second indication code block; the transceiver unit 902 is specifically configured to send, through the first PCS, the second indication code block to the first PMA; and the processing unit 901 is specifically configured to switch, through the first PMA, the first PMA from the operating state to the sleep state based on the received second indication code block.

In an optional manner, the processing unit 901 is specifically configured to switch, through the first PCS, the first PCS from the operating state to the sleep state based on the second indication information, and send the second indication information to the first PMA; and the processing unit 901 is specifically configured to switch, through the first PMA based on the received second indication information, the first PMA from the operating state to the sleep state, and obtain the second indication code block.

In an optional manner, the first PCS includes a plurality of first PCS lanes, and the processing unit 901 is specifically configured to switch, through the first PCS, the plurality of first PCS lanes from a sleep state to an operating state; or switch, through the first PCS, a part of the plurality of first PCS lanes from a sleep state to an operating state based on a first service flow rate threshold.

In an optional manner, the first PCS includes a plurality of first PCS lanes, and the processing unit 901 is specifically configured to switch, through the first PCS, the plurality of first PCS lanes from an operating state to a sleep state; or switch, through the first PCS, a part of the plurality of first PCS lanes from an operating state to a sleep state based on a second service flow rate threshold.

In an optional manner, the first PCS includes a plurality of first PCS lanes, and the transceiver unit 902 is specifically configured to send, through the first PCS, the first indication code block via at least one of the plurality of first PCS lanes.

In an optional manner, the first PCS includes a plurality of first PCS lanes, and the transceiver unit 902 is specifically configured to send, through the first PCS, the second indication code block via at least one of the plurality of first PCS lanes.

In an optional manner, the first PHY includes a first PMD, and the processing unit 901 is specifically configured to switch, through the first PHY based on the first indication information, the first PMD from a keepalive state to an operating state, and switch, through the first PHY, the first SerDes corresponding to the first PMD from a keepalive state to an operating state.

In an optional manner, the first PMD includes a plurality of first PMD lanes, and the processing unit 901 is specifically configured to switch, through the first PMD, the plurality of first PMD lanes from a keepalive state to an operating state; or switch, through the first PMD, a part of the plurality of first PMD lanes from a keepalive state to an operating state based on the first service flow rate threshold.

In an optional manner, when the first SerDes is in the keepalive state, the transceiver unit 902 is further configured to periodically send, through the first PHY, a keepalive code block to the receiving device via the first SerDes.

In an optional manner, a length of the first indication code block is 10 bits, 64 bits, 66 bits, 128 bits, or 130 bits.

In another embodiment, the data processing apparatus is a receiving device, the receiving device includes a second PHY, and the receiving device includes a transceiver unit 902 and a processing unit 901. The transceiver unit 902 is configured to receive, through the second PHY, a first indication code block sent by a first PHY of a sending device, where the first indication code block indicates the second PHY to be switched from a sleep state to an operating state, and indicates a second SerDes corresponding to the second PHY to be switched from a keepalive state to an operating state. The processing unit 901 is configured to switch, through the second PHY based on the first indication code block, the second PHY from the sleep state to the operating state, and the second SerDes corresponding to the second PHY from the keepalive state to the operating state.

In an optional manner, the second PHY includes a second PCS and a second PMA, and that the second PHY is switched from the sleep state to the operating state includes: The second PCS is switched from a sleep state to an operating state, and the second PMA is switched from a sleep state to an operating state.

In an optional manner, the transceiver unit 902 is further configured to receive, through the second PHY, a second indication code block sent by the first PHY of the sending device, where the second indication code block indicates the second PHY to be switched from the operating state to the sleep state, and indicates the second SerDes corresponding to the second PHY to be switched from the operating state to the keepalive state. The processing unit 901 is further configured to switch, through the second PHY based on the second indication code block, the second PHY from the operating state to the sleep state, and the second SerDes corresponding to the second PHY from the operating state to the keepalive state.

In an optional manner, the second PHY includes a second PCS and a second PMA, and that the second PHY is switched from the operating state to the sleep state includes: The second PCS is switched from an operating state to a sleep state and the second PMA is switched from an operating state to a sleep state.

In an optional manner, the processing unit 901 is specifically configured to switch, through the second PMA, the second PMA from the sleep state to the operating state based on the first indication code block; the transceiver unit 902 is specifically configured to send, through the second PMA, first indication information to the second PCS; and the transceiver unit 902 is specifically configured to receive, through the second PCS, the first indication information, and switch the second PCS from the sleep state to the operating state.

In an optional manner, the processing unit 901 is specifically configured to switch, through the second PMA, the second PMA from the operating state to the sleep state based on the second indication code block; the transceiver unit 902 is specifically configured to send, through the second PMA, second indication information to the second PCS; and the transceiver unit 902 is specifically configured to receive, through the second PCS, the second indication information, and switch the second PCS from the operating state to the sleep state.

In an optional manner, the second PCS includes a plurality of second PCS lanes, and the processing unit 901 is specifically configured to switch, through the second PCS, the plurality of second PCS lanes from a sleep state to an operating state; or switch, through the second PCS, a part of the plurality of second PCS lanes from a sleep state to an operating state based on a first service flow rate threshold.

In an optional manner, the second PCS includes a plurality of second PCS lanes, and the processing unit 901 is specifically configured to switch, through the second PCS, the plurality of second PCS lanes from an operating state to a sleep state; or switch, through the second PCS, a part of the plurality of second PCS lanes from an operating state to a sleep state based on a second service flow rate threshold.

In an optional manner, the second PHY includes a second PMD, and the processing unit 901 is specifically configured to switch, through the second PHY based on the first indication code block, the second PMD from a keepalive state to an operating state, and switch, through the second PHY, the second SerDes corresponding to the second PMD from a keepalive state to an operating state.

In an optional manner, the second PMD includes a plurality of second PMD lanes, and the processing unit 901 is specifically configured to switch, through the second PMD, the plurality of second PMD lanes from a keepalive state to an operating state; or switch, through the second PMD, a part of the plurality of second PMD lanes from a keepalive state to an operating state based on the first service flow rate threshold.

In an optional manner, the second PCS includes a plurality of second PCS lanes, and the transceiver unit 902 is specifically configured to receive, through the second PCS, the second indication information via at least one of the plurality of second PCS lanes.

In an optional manner, when the second SerDes is in the keepalive state, the transceiver unit 902 is specifically configured to periodically receive, through the second PHY, a keepalive code block via the second SerDes.

In an optional manner, a length of the first indication code block is 10 bits, 64 bits, 66 bits, 128 bits, or 130 bits.

In still another embodiment, the data processing apparatus is a sending device, the sending device includes a first MAC layer and a first PHY, and the sending device includes a transceiver unit 902 and a processing unit 901. The transceiver unit 902 is configured to receive, through the first PHY, second indication information from the first MAC layer, where the second indication information indicates the sending device to stop sending a service flow to a receiving device. The processing unit 901 is configured to obtain, through the first PHY, a second indication code block based on the second indication information, where the second indication code block indicates the second PHY of the receiving device to be switched from the operating state to the sleep state, and indicates the second SerDes corresponding to the second PHY to be switched from the operating state to the keepalive state. The transceiver unit 902 is further configured to send, through the first PHY, the second indication code block to the receiving device.

In an optional manner, the processing unit 901 is configured to switch, through the first PHY based on the second indication information, the first PHY from the operating state to the sleep state, and switch the first SerDes corresponding to the first PHY from the operating state to the keepalive state.

In an optional manner, the first PHY includes a first PCS and a first PMA, and the processing unit 901 is specifically configured to switch, through the first PCS based on the second indication information, the first PCS from the operating state to the sleep state, and obtain the second indication code block; the transceiver unit 902 is specifically configured to send, through the first PCS, the second indication code block to the first PMA; and the processing unit 901 is specifically configured to switch, through the first PMA, the first PMA from the operating state to the sleep state based on the received second indication code block.

In an optional manner, the processing unit 901 is specifically configured to switch, through the first PCS, the first PCS from the operating state to the sleep state based on the second indication information, and send the second indication information to the first PMA; and the processing unit 901 is specifically configured to switch, through the first PMA based on the received second indication information, the first PMA from the operating state to the sleep state, and obtain the second indication code block.

In an optional manner, the first PCS includes a plurality of first PCS lanes, and the processing unit 901 is specifically configured to switch, through the first PCS, the plurality of first PCS lanes from an operating state to a sleep state; or switch, through the first PCS, a part of the plurality of first PCS lanes from an operating state to a sleep state based on a second service flow rate threshold.

In an optional manner, the first PCS includes a plurality of first PCS lanes, and the transceiver unit 902 is specifically configured to send, through the first PCS, the second indication code block via at least one of the plurality of first PCS lanes.

In an optional manner, when the first SerDes is in the keepalive state, the transceiver unit 902 is specifically configured to periodically send, through the first PHY, a keepalive code block to the receiving device via the first SerDes.

In an optional manner, a length of the second indication code block is 10 bits, 64 bits, 66 bits, 128 bits, or 130 bits.

In yet another embodiment, the data processing apparatus is a receiving device, the receiving device includes a second PHY, and the receiving device includes a transceiver unit 902 and a processing unit 901. The transceiver unit 902 is configured to receive, through the second PHY, a second indication code block sent by the first PHY of the sending device, where the second indication code block indicates the second PHY to be switched from the operating state to the sleep state, and indicates the second SerDes corresponding to the second PHY to be switched from the operating state to the keepalive state. The processing unit 901 is configured to switch, through the second PHY based on the second indication code block, the second PHY from the operating state to the sleep state, and the second SerDes corresponding to the second PHY from the operating state to the keepalive state.

In an optional manner, the second PHY includes a second PCS and a second PMA, and that the second PHY is switched from the operating state to the sleep state includes: The second PCS is switched from an operating state to a sleep state and the second PMA is switched from an operating state to a sleep state.

In an optional manner, the processing unit 901 is specifically configured to switch, through the second PMA, the second PMA from the operating state to the sleep state based on the second indication code block; the transceiver unit 902 is specifically configured to send, through the second PMA, second indication information to the second PCS; and the transceiver unit 902 is specifically configured to receive, through the second PCS, the second indication information, and switch the second PCS from the operating state to the sleep state.

In an optional manner, the second PCS includes a plurality of second PCS lanes, and the transceiver unit 902 is specifically configured to receive, through the second PCS, the second indication information via at least one of the plurality of second PCS lanes.

In an optional manner, the second PCS includes a plurality of second PCS lanes, and the transceiver unit 902 is specifically configured to switch, through the second PCS, the plurality of second PCS lanes from an operating state to a sleep state; or switch, through the second PCS, a part of the plurality of second PCS lanes from an operating state to a sleep state based on a second service flow rate threshold.

In an optional manner, when the second SerDes is in the keepalive state, the transceiver unit 902 is specifically configured to periodically receive, through the second PHY, a keepalive code block via the second SerDes.

In an optional manner, a length of the second indication code block is 10 bits, 64 bits, 66 bits, 128 bits, or 130 bits.

This application provides an integrated circuit (equivalent to a sending device), where the integrated circuit includes an interface circuit and a control circuit, and the interface circuit is coupled to the control circuit. The interface circuit is configured to receive, through a first PHY, first indication information from a first MAC layer, where the first indication information indicates the sending device to send a service flow to a receiving device. The control circuit is configured to obtain, through the first PHY, a first indication code block based on the first indication information, where the first indication code block indicates a second PHY of the receiving device to be switched from a sleep state to an operating state, and indicates a second serializer/deserializer SerDes corresponding to the second PHY to be switched from a keepalive state to an operating state. The interface circuit is further configured to send, through the first PHY, the first indication code block to the receiving device.

This application provides another integrated circuit (equivalent to a receiving device), where the integrated circuit includes an interface circuit and a control circuit, and the interface circuit is coupled to the control circuit. The interface circuit is configured to receive, through a second PHY, a first indication code block sent by a first PHY of a sending device, where the first indication code block indicates the second PHY to be switched from a sleep state to an operating state, and indicates a second serializer/deserializer SerDes corresponding to the second PHY to be switched from a keepalive state to an operating state. The control circuit is configured to switch, through the second PHY based on the first indication code block, the second PHY from the sleep state to the operating state, and the second SerDes corresponding to the second PHY from the keepalive state to the operating state.

FIG. 10 is a diagram of a structure of a data processing apparatus 2100 according to this application. The data processing apparatus 2100 may be the sending device or the receiving device in FIG. 3 to FIG. 8. The apparatus 2100 is, for example, a switch or a router. The apparatus 2100 may be implemented by using a bus architecture.

As shown in FIG. 10, the apparatus 2100 includes a main control board 2110 and an interface board 2130.

The main control board is also referred to as a main processing unit (main processing unit, MPU) or a route processor card (route processor card). The main control board 2110 is configured to control and manage components in the apparatus 2100, including functions of route computation, device management, device maintenance, and protocol processing. The main control board 2110 includes a central processing unit 2111 and a memory 2112.

The interface board 2130 is also referred to as a line interface unit card (line processing unit, LPU), a line card (line card), or a service board. The interface board 2130 is configured to provide various service interfaces and implement data packet forwarding. The service interface includes but is not limited to an Ethernet interface, a POS (Packet over SONET/SDH) interface, and the like. The Ethernet interface is, for example, a flexible Ethernet service interface (Flexible Ethernet Client, FlexE Client). The interface board 2130 includes a central processing unit 2131, a network processor 2132, a forwarding entry memory 2134, and a physical interface card (physical interface card, PIC) 2133.

The central processing unit 2131 on the interface board 2130 is configured to control and manage the interface board 2130, and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the apparatus 2100, the network processor 2132 sends the packet to a CPU (for example, the central processing unit 2131) for processing. If a destination address of the packet is not an address of the apparatus 2100, the network processor 2132 finds, from a forwarding table based on the destination address, a next hop and an outbound interface that correspond to the destination address, and forwards the packet to the outbound interface corresponding to the destination address. Processing on an uplink packet may include: processing an inbound interface of the packet and searching a forwarding table. Processing on a downlink packet may include: searching a forwarding table, and the like. In some embodiments, the central processing unit may also perform a function of the forwarding chip, for example, implement software forwarding based on a general-purpose CPU, so that the interface board does not need the forwarding chip.

The physical interface card 2133 is configured to implement an interconnection function at a physical layer, so that original traffic enters the interface board 2130 from the physical interface card 2133, and a processed packet is sent out from the physical interface card 2133. The physical interface card 2133 is also referred to as a subcard, may be installed on the interface board 2130, and is responsible for converting an optical/electrical signal into a packet, performing validity check on the packet, and forwarding the packet to the network processor 2132 for processing. In some embodiments, the central processing unit 2131 may also perform a function of the network processor 2132, for example, implement software forwarding based on a general-purpose CPU, so that the physical interface card 2133 does not need the network processor 2132. The physical interface card 2133 may be configured to implement the PHY in the sending device or the receiving device in this application. Details are not described herein again.

Optionally, the apparatus 2100 includes a plurality of interface boards. For example, the apparatus 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again. The interface board includes one or more interfaces described in the foregoing embodiments.

Optionally, the apparatus 2100 further includes a switching board 2120. The switching board 2120 may also be referred to as a switch fabric unit (switch fabric unit, SFU). When the apparatus has a plurality of interface boards, the switching board 2120 is configured to complete data exchange between the interface boards. For example, the interface board 2130 and the interface board 2140 may communicate with each other through the switching board 2120.

The main control board 2110 is coupled to the interface board. For example, the main control board 2110, the interface board 2130 and the interface board 2140, and the switching board 2120 are connected to a system backboard through a system bus for interworking. In a possible implementation, an inter-process communication (inter-process communication, IPC) protocol channel is established between the main control board 2110 and the interface board 2130, and between the main control board 2110 and the interface board 2140. The main control board 2110 communicates with the interface board 2130 and the interface board 2140 through IPC channels.

Logically, the apparatus 2100 includes a control plane and a forwarding plane. The control plane includes the main control board 2110 and the central processing unit 2111. The forwarding plane includes components that perform forwarding, for example, the forwarding entry memory 2134, the physical interface card 2133, and the network processor 2132. The control plane performs functions such as a function of a router, generating a forwarding table, processing signaling and protocol packets, and configuring and maintaining a status of the apparatus. The control plane delivers the generated forwarding table to the forwarding plane. On the forwarding plane, the network processor 2132 searches the forwarding table delivered by the control plane to forward a packet received by the physical interface card 2133. The forwarding table delivered by the control plane may be stored in the forwarding entry memory 2134. In some embodiments, the control plane and the forwarding plane may be completely separated, and are not on a same apparatus.

It should be noted that there may be one or more main control boards. When there are a plurality of main control boards, the main control boards may include an active main control board and a standby main control board. There may be one or more interface boards, and more interface boards provided indicates a stronger data processing capability of the apparatus. There may also be one or more physical interface cards on the interface board. There may be no switching board or one or more switching boards. When there are a plurality of switching boards, load balancing and redundancy backup may be implemented together. In a centralized forwarding architecture, the apparatus may not need a switching board, and the interface board provides a function of processing service data of an entire system. In a distributed forwarding architecture, the apparatus may include at least one switching board, and exchange data between a plurality of interface boards through the switching board, to provide a large-capacity data exchange and processing capability. Therefore, a data access and processing capability of the apparatus of the distributed architecture is better than that of the apparatus of the centralized architecture. Optionally, the apparatus may alternatively be in a form in which there is only one card. To be specific, there is no switching board, and functions of the interface board and the main control board are integrated on the card. In this case, the central processing unit on the interface board and the central processing unit on the main control board may be combined to form one central processing unit on the card, to perform functions obtained by combining the two central processing units. The apparatus in this form (for example, the apparatus like a low-end switch or a router) has a weak data exchange and processing capability. A specific architecture that is to be used depends on a specific networking deployment scenario. This is not limited herein.

It should be understood that the foregoing processor may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs are available. For example, the random access memory includes a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

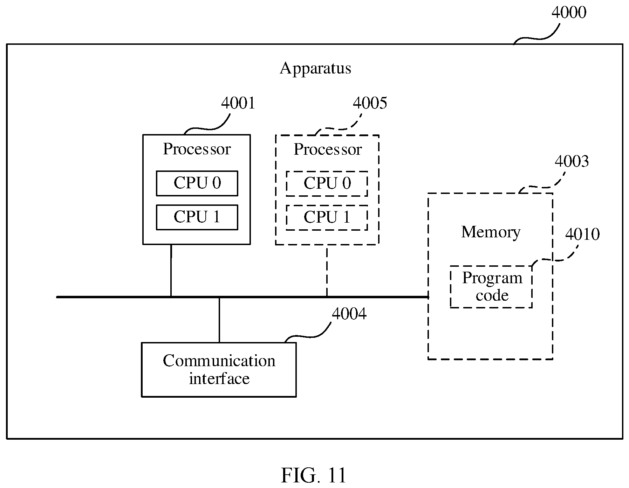

FIG. 11 is a diagram of a structure of an apparatus 4000 according to an example embodiment of this application. The apparatus 4000 shown in FIG. 11 is configured to perform an operation related to a function of the interface shown in any one of FIG. 3 to FIG. 8. The apparatus 4000 is, for example, a switch, a router, or a controller, or may be a server, a storage device, a network device, or the like. The apparatus 4000 may be implemented by using a bus architecture.

As shown in FIG. 11, the apparatus 4000 includes at least one processor 4001 and at least one communication interface 4004. In some embodiments, the processor 4001 is coupled to a memory 4003. The communication interface 4004 may be configured to implement the PHY in the sending device or the receiving device in this application. Details are not described herein again.

The processor 4001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 4001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable logic gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination of one or more microprocessors, or a combination of the DSP and a microprocessor.

Optionally, the apparatus 4000 further includes a bus. The bus is configured to transfer information between components of the apparatus 4000. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one bold line is used to represent the bus in FIG. 11, but this does not mean that there is only one bus or only one type of bus.

The memory 4003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other compact disc storage, optical disk storage (including compact disc, laser disc, optical disc, digital versatile disc, Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 4003 exists independently, and is connected to the processor 4001 through the bus. The memory 4003 may alternatively be integrated with the processor 4001.

The communication interface 4004 is any apparatus, for example, a transceiver, and is configured to communicate with another device or a communication network. The communication network may be the Ethernet, a radio access network (RAN), a wireless local area network (wireless local area network, WLAN), or the like. The communication interface 4004 may include a wired communication interface, and may further include a wireless communication interface. Specifically, the communication interface 4004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In embodiments of this application, the communication interface 4004 may be used by the apparatus 4000 to communicate with another device.

During specific implementation, in an embodiment, the processor 4001 may include one or more CPUs, for example, a CPU 0 and a CPU 1 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the apparatus 4000 may include a plurality of processors, for example, the processor 4001 and a processor 4005 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the apparatus 4000 may further include an output device and an input device. The output device communicates with the processor 4001, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 4001, and may receive an input by a user in a plurality of manners. For example, the input device may be a mouse, a keyboard, a touchscreen device, a sensing device, or the like.

In some embodiments, the memory 4003 is configured to store program code 4010 for executing the solutions of this application, and the processor 4001 may execute the program code 4010 stored in the memory 4003. In other words, the apparatus 4000 may implement functions of the interface in any one of FIG. 3 to FIG. 8 through the processor 4001 and by using the program code 4010 in the memory 4003. The program code 4010 may include one or more software modules. Optionally, the processor 4001 may alternatively store program code or instructions for executing the solutions of this application.

In some embodiments, the communication interface 4004 is configured to perform an operation related to a function of the interface shown in any one of FIG. 3 to FIG. 8.

Based on the foregoing embodiments, an embodiment of this application further provides a computer-readable storage medium. The computer-readable storage medium stores instructions. When the instructions are executed, the method performed by each device in any one of the foregoing method embodiments is implemented. For example, the method performed by the image encoding apparatus or the image decoding apparatus in the embodiment shown in FIG. 4 is implemented. The computer-readable storage medium may include: any medium that can store program code, like a USB flash drive, a removable hard disk, a read-only memory, a random access memory, a magnetic disk, or an optical disc.

Based on the foregoing embodiments, an embodiment of this application provides a data processing system. The communication system includes the sending device and the receiving device in any one of the foregoing method embodiments, and may be configured to perform the method performed by each device in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the apparatuses (systems), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions may be loaded onto the computer or the another programmable image processing apparatus, so that a series of operation steps are performed on the computer or the another programmable apparatus to generate computer-implemented processing. Therefore, the instructions executed on the computer or the another programmable apparatus provide steps for implementing a specified function in one or more processes in the flowcharts and/or in one or more blocks in the block diagrams.

## Claims

1. A data processing method, applied to a sending device, wherein the sending device comprises a first medium access control MAC layer and a first physical layer PHY, and the method comprises:
receiving, by the first PHY, first indication information from the first MAC layer, wherein the first indication information indicates the sending device to send a service flow to a receiving device;
obtaining, by the first PHY, a first indication code block based on the first indication information, wherein the first indication code block indicates a second PHY of the receiving device to be switched from a sleep state to an operating state, and indicates a second serializer/deserializer SerDes corresponding to the second PHY to be switched from a keepalive state to an operating state; and
sending, by the first PHY, the first indication code block to the receiving device.

2. The method according to claim 1, further comprising:
switching, by the first PHY based on the first indication information, the first PHY from a sleep state to an operating state, and a first SerDes corresponding to the first PHY from a keepalive state to an operating state.

3. The method according to claim 2, wherein the first PHY comprises a first physical coding sublayer PCS and a first physical medium attachment PMA, and switching the first PHY from the sleep state to the operating state comprises switching the first PCS from a sleep state to an operating state and switching the first PMA from a sleep state to an operating state.

4. The method according to any one of claims 1 to 3, further comprising:
receiving, by the first PHY, second indication information from the first MAC layer, wherein the second indication information indicates the sending device to stop sending a service flow to the receiving device;
obtaining, by the first PHY, a second indication code block based on the second indication information, wherein the second indication code block indicates the second PHY of the receiving device to be switched from the operating state to the sleep state, and indicates the second SerDes corresponding to the second PHY to be switched from the operating state to the keepalive state; and
sending, by the first PHY, the second indication code block to the receiving device.

5. The method according to claim 4, further comprising:
switching, by the first PHY based on the second indication information, the first PHY from the operating state to the sleep state, and the first SerDes corresponding to the first PHY from the operating state to the keepalive state.

6. The method according to claim 5, wherein the first PHY comprises the first PCS and the first PMA, and switching the first PHY from the operating state to the sleep state comprises switching the first PCS from the operating state to the sleep state and switching the first PMA from the operating state to the sleep state.

7. The method according to claim 3, wherein obtaining, by the first PHY, the first indication code block based on the first indication information comprises:
switching, by the first PCS based on the first indication information, the first PCS from the sleep state to the operating state, and obtaining the first indication code block;
sending, by the first PCS, the first indication code block to the first PMA; and
switching, by the first PMA, the first PMA from the sleep state to the operating state based on the received first indication code block.

8. The method according to claim 3, wherein obtaining, by the first PHY, the first indication code block based on the first indication information comprises:
switching, by the first PCS based on the first indication information, the first PCS from the sleep state to the operating state, and sending the first indication information to the first PMA; and
switching, by the first PMA based on the received first indication information, the first PMA from the sleep state to the operating state, and obtaining the first indication code block.

9. The method according to claim 6, wherein obtaining, by the first PHY, the second indication code block based on the second indication information comprises:
switching, by the first PCS based on the second indication information, the first PCS from the operating state to the sleep state, and obtaining the second indication code block;
sending, by the first PCS, the second indication code block to the first PMA; and
switching, by the first PMA, the first PMA from the operating state to the sleep state based on the received second indication code block.

10. The method according to claim 6, wherein obtaining, by the first PHY, the second indication code block based on the second indication information comprises:
switching, by the first PCS based on the second indication information, the first PCS from the operating state to the sleep state, and sending the second indication information to the first PMA; and
switching, by the first PMA based on the received second indication information, the first PMA from the operating state to the sleep state, and obtaining the second indication code block.

11. The method according to claim 7 or 8, wherein the first PCS comprises a plurality of first PCS lanes, and switching, by the first PCS based on the first indication information, the first PCS from the sleep state to the operating state comprises:
switching, by the first PCS, the plurality of first PCS lanes from a sleep state to an operating state; or
switching, by the first PCS, a part of the plurality of first PCS lanes from a sleep state to an operating state based on a first service flow rate threshold.

12. The method according to claim 9 or 10, wherein the first PCS comprises a plurality of first PCS lanes, and switching, by the first PCS based on the second indication information, the first PCS from the operating state to the sleep state comprises:
switching, by the first PCS, the plurality of first PCS lanes from an operating state to a sleep state; or
switching, by the first PCS, a part of the plurality of first PCS lanes from an operating state to a sleep state based on a second service flow rate threshold.

13. The method according to claim 7, wherein the first PCS comprises a plurality of first PCS lanes, and sending, by the first PCS, the first indication code block to the first PMA comprises:
sending, by the first PCS, the first indication code block via at least one of the plurality of first PCS lanes.

14. The method according to claim 9, wherein the first PCS comprises a plurality of first PCS lanes, and sending, by the first PCS, the second indication code block to the first PMA comprises:
sending, by the first PCS, the second indication code block via at least one of the plurality of first PCS lanes.

15. The method according to any one of claims 2 to 14, wherein the first PHY comprises a first physical media dependent PMD, and switching, by the first PHY based on the first indication information, the first PHY from the sleep state to the operating state, and the first SerDes corresponding to the first PHY from the keepalive state to the operating state comprises:
switching, by the first PHY, the first PMD from a keepalive state to an operating state based on the first indication information; and
switching, by the first PHY, the first SerDes corresponding to the first PMD from a keepalive state to an operating state.

16. The method according to claim 15, wherein the first PMD comprises a plurality of first PMD lanes, and switching, by the first PHY, the first PMD from the keepalive state to the operating state based on the first indication information comprises:
switching, by the first PMD, the plurality of first PMD lanes from a keepalive state to an operating state; or
switching, by the first PMD, a part of the plurality of first PMD lanes from a keepalive state to an operating state based on the first service flow rate threshold.

17. The method according to claim 2 or 5, wherein when the first SerDes is in the keepalive state, the method further comprises:
periodically sending, by the first PHY, a keepalive code block to the receiving device via the first SerDes.

18. The method according to any one of claims 1 to 17, wherein a length of the first indication code block is 10 bits, 64 bits, 66 bits, 128 bits, or 130 bits.

19. A data processing method, applied to a receiving device, wherein the receiving device comprises a second physical layer PHY, and the method comprises:
receiving, by the second PHY, a first indication code block sent by a first PHY of a sending device, wherein the first indication code block indicates the second PHY to be switched from a sleep state to an operating state, and indicates a second serializer/deserializer SerDes corresponding to the second PHY to be switched from a keepalive state to an operating state; and
switching, by the second PHY based on the first indication code block, the second PHY from the sleep state to the operating state, and the second SerDes corresponding to the second PHY from the keepalive state to the operating state.

20. The method according to claim 19, wherein the second PHY comprises a second physical coding sublayer PCS and a second physical medium attachment PMA, and switching the second PHY from the sleep state to the operating state comprises switching the second PCS from a sleep state to an operating state and switching the second PMA from a sleep state to an operating state.

21. The method according to claim 19 or 20, further comprising:
receiving, by the second PHY, a second indication code block sent by the first PHY of the sending device, wherein the second indication code block indicates the second PHY to be switched from the operating state to the sleep state, and indicates the second SerDes corresponding to the second PHY to be switched from the operating state to the keepalive state; and
switching, by the second PHY based on the second indication code block, the second PHY from the operating state to the sleep state, and the second SerDes corresponding to the second PHY from the operating state to the keepalive state.

22. The method according to claim 21, wherein the second PHY comprises the second PCS and the second PMA, and switching the second PHY from the operating state to the sleep state comprises switching the second PCS from the operating state to the sleep state and switching the second PMA from the operating state to the sleep state.

23. The method according to claim 20, wherein switching, by the second PHY based on the first indication code block, the second PHY from the sleep state to the operating state comprises:
switching, by the second PMA based on the first indication code block, the second PMA from the sleep state to the operating state;
sending, by the second PMA, first indication information to the second PCS; and
receiving, by the second PCS, the first indication information, and switching the second PCS from the sleep state to the operating state.

24. The method according to claim 22, wherein switching, by the second PHY based on the second indication code block, the second PHY from the operating state to the sleep state comprises:
switching, by the second PMA, the second PMA from the operating state to the sleep state based on the second indication code block;
sending, by the second PMA, second indication information to the second PCS; and
receiving, by the second PCS, the second indication information, and switching the second PCS from the operating state to the sleep state.

25. The method according to claim 22, wherein the second PCS comprises a plurality of second PCS lanes, and receiving, by the second PCS, the first indication information, and switching the second PCS from the sleep state to the operating state comprises:
switching, by the second PCS, the plurality of second PCS lanes from a sleep state to an operating state; or
switching, by the second PCS, a part of the plurality of second PCS lanes from a sleep state to an operating state based on a first service flow rate threshold.

26. The method according to any one of claims 19 to 25, wherein the second PHY comprises a second physical media dependent PMD, and switching, by the second PHY based on the first indication code block, the second SerDes corresponding to the second PHY from the keepalive state to the operating state comprises:
switching, by the second PHY based on the first indication code block, the second PMD from a keepalive state to an operating state; and
switching, by the second PHY, the second SerDes corresponding to the second PMD from a keepalive state to an operating state.

27. The method according to claim 26, wherein the second PMD comprises a plurality of second PMD lanes, and switching, by the second PHY based on the first indication code block, the second PMD from the keepalive state to the operating state comprises:
switching, by the second PMD, the plurality of second PMD lanes from a keepalive state to an operating state; or
switching, by the second PMD, a part of the plurality of second PMD lanes from a keepalive state to an operating state based on the first service flow rate threshold.

28. The method according to claim 24, wherein the second PCS comprises a plurality of second PCS lanes, and receiving, by the second PCS, the second indication information comprises:
receiving, by the second PCS, the second indication information via at least one of the plurality of second PCS lanes.

29. The method according to claim 19 or 21, wherein when the second SerDes is in the keepalive state, the method further comprises:
periodically receiving, by the second PHY, a keepalive code block via the second SerDes.

30. The method according to any one of claims 19 to 29, wherein a length of the first indication code block is 10 bits, 64 bits, 66 bits, 128 bits, or 130 bits.

31. A sending device, wherein the sending device comprises a first medium access control MAC layer and a first physical layer PHY, and the sending device comprises:
a transceiver unit, configured to receive, through the first PHY, first indication information from the first MAC layer, wherein the first indication information indicates the sending device to send a service flow to a receiving device; and
a processing unit, configured to obtain, through the first PHY, a first indication code block based on the first indication information, wherein the first indication code block indicates a second PHY of the receiving device to be switched from a sleep state to an operating state, and indicates a second serializer/deserializer SerDes corresponding to the second PHY to be switched from a keepalive state to an operating state, wherein
the transceiver unit is further configured to send, through the first PHY, the first indication code block to the receiving device.

32. The device according to claim 31, wherein the processing unit is further configured to switch, through the first PHY based on the first indication information, the first PHY from a sleep state to an operating state, and a first SerDes corresponding to the first PHY from a keepalive state to an operating state.

33. The device according to claim 32, wherein the first PHY comprises a first physical coding sublayer PCS and a first physical medium attachment PMA, and switching the first PHY from the sleep state to the operating state comprises switching the first PCS from a sleep state to an operating state and switching the first PMA from a sleep state to an operating state.

34. The device according to any one of claims 31 to 33, wherein
the transceiver unit is further configured to receive, through the first PHY, second indication information from the first MAC layer, wherein the second indication information indicates the sending device to stop sending a service flow to the receiving device;
the processing unit is further configured to obtain, through the first PHY, a second indication code block based on the second indication information, wherein the second indication code block indicates the second PHY of the receiving device to be switched from the operating state to the sleep state, and indicates the second SerDes corresponding to the second PHY to be switched from the operating state to the keepalive state; and
the transceiver unit is further configured to send, through the first PHY, the second indication code block to the receiving device.

35. The device according to claim 34, further comprising:
the transceiver unit is further configured to switch, through the first PHY based on the second indication information, the first PHY from the operating state to the sleep state, and the first SerDes corresponding to the first PHY from the operating state to the keepalive state.

36. The device according to claim 35, wherein the first PHY comprises the first PCS and the first PMA, and switching the first PHY from the operating state to the sleep state comprises switching the first PCS from the operating state to the sleep state and switching the first PMA from the operating state to the sleep state.

37. The device according to claim 33, wherein the processing unit is specifically configured to switch, through the first PCS based on the first indication information, the first PCS from the sleep state to the operating state, and obtain the first indication code block;
the transceiver unit is specifically configured to send, through the first PCS, the first indication code block to the first PMA; and
the processing unit is specifically configured to switch, through the first PMA, the first PMA from the sleep state to the operating state based on the received first indication code block.

38. The device according to claim 33, wherein the processing unit is specifically configured to switch, through the first PCS based on the first indication information, the first PCS from the sleep state to the operating state, and send the first indication information to the first PMA; and
the processing unit is specifically configured to switch, through the first PMA based on the received first indication information, the first PMA from the sleep state to the operating state, and obtain the first indication code block.

39. The device according to claim 36, wherein the processing unit is specifically configured to switch, through the first PCS based on the second indication information, the first PCS from the operating state to the sleep state, and obtain the second indication code block;
the transceiver unit is specifically configured to send, through the first PCS, the second indication code block to the first PMA; and
the processing unit is specifically configured to switch, through the first PMA, the first PMA from the operating state to the sleep state based on the received second indication code block.

40. The device according to claim 36, wherein the processing unit is specifically configured to switch, through the first PCS based on the second indication information, the first PCS from the operating state to the sleep state, and send the second indication information to the first PMA; and
the processing unit is specifically configured to switch, through the first PMA based on the received second indication information, the first PMA from the operating state to the sleep state, and obtain the second indication code block.

41. The device according to claim 37 or 38, wherein the first PCS comprises a plurality of first PCS lanes, and the processing unit is specifically configured to: switch, through the first PCS, the plurality of first PCS lanes from a sleep state to an operating state; or
switch, through the first PCS, a part of the plurality of first PCS lanes from a sleep state to an operating state based on a first service flow rate threshold.

42. The device according to claim 39 or 40, wherein the first PCS comprises a plurality of first PCS lanes, and the processing unit is specifically configured to: switch, through the first PCS, the plurality of first PCS lanes from an operating state to a sleep state; or
switch, through the first PCS, a part of the plurality of first PCS lanes from an operating state to a sleep state based on a second service flow rate threshold.

43. A receiving device, wherein the receiving device comprises a second physical layer PHY, and the receiving device comprises:
a transceiver unit, configured to receive, through the second PHY, a first indication code block sent by a first PHY of a sending device, wherein the first indication code block indicates the second PHY to be switched from a sleep state to an operating state, and indicates a second serializer/deserializer SerDes corresponding to the second PHY to be switched from a keepalive state to an operating state; and
a processing unit, configured to switch, through the second PHY based on the first indication code block, the second PHY from the sleep state to the operating state, and the second SerDes corresponding to the second PHY from the keepalive state to the operating state.

44. The device according to claim 43, wherein the second PHY comprises a second physical coding sublayer PCS and a second physical medium attachment PMA, and switching the second PHY from the sleep state to the operating state comprises switching the second PCS from a sleep state to an operating state and switching the second PMA from a sleep state to an operating state.

45. The device according to claim 43 or 44, wherein the transceiver unit is further configured to receive, through the second PHY, a second indication code block sent by the first PHY of the sending device, wherein the second indication code block indicates the second PHY to be switched from the operating state to the sleep state, and indicates the second SerDes corresponding to the second PHY to be switched from the operating state to the keepalive state; and
the processing unit is further configured to switch, through the second PHY based on the second indication code block, the second PHY from the operating state to the sleep state, and the second SerDes corresponding to the second PHY from the operating state to the keepalive state.

46. The device according to claim 45, wherein the second PHY comprises the second PCS and the second PMA, and switching the second PHY from the operating state to the sleep state comprises switching the second PCS from the operating state to the sleep state and switching the second PMA from the operating state to the sleep state.

47. The device according to claim 44, wherein the processing unit is specifically configured to switch, through the second PMA based on the first indication code block, the second PMA from the sleep state to the operating state;
the transceiver unit is specifically configured to send, through the second PMA, first indication information to the second PCS; and
the transceiver unit is specifically configured to receive, through the second PCS, the first indication information, and switch the second PCS from the sleep state to the operating state.

48. The device according to claim 46, wherein the processing unit is specifically configured to switch, through the second PMA, the second PMA from the operating state to the sleep state based on the second indication code block;
the transceiver unit is specifically configured to send, through the second PMA, second indication information to the second PCS; and
the transceiver unit is specifically configured to receive, through the second PCS, the second indication information, and switch the second PCS from the operating state to the sleep state.

49. The device according to claim 46, wherein the second PCS comprises a plurality of second PCS lanes, and the processing unit is specifically configured to: switch, through the second PCS, the plurality of second PCS lanes from a sleep state to an operating state; or
switch, through the second PCS, a part of the plurality of second PCS lanes from a sleep state to an operating state based on a first service flow rate threshold.

50. The device according to any one of claims 43 to 49, wherein the second PHY comprises a second physical media dependent PMD, and the processing unit is specifically configured to: switch, through the second PHY based on the first indication code block, the second PMD from a keepalive state to an operating state; and
switch, through the second PHY, the second SerDes corresponding to the second PMD from a keepalive state to an operating state.

51. A chip, wherein the chip comprises a processor, and the processor is configured to perform the method according to any one of claims 1 to 18, or perform the method according to any one of claims 19 to 30.

52. An integrated circuit, wherein the integrated circuit comprises an interface circuit and a control circuit, and the interface circuit is coupled to the control circuit;
the interface circuit is configured to receive, through the first PHY, first indication information from a first MAC layer, wherein the first indication information indicates the sending device to send a service flow to a receiving device; and
the control circuit is configured to obtain, through the first PHY, a first indication code block based on the first indication information, wherein the first indication code block indicates a second PHY of the receiving device to be switched from a sleep state to an operating state, and indicates a second serializer/deserializer SerDes corresponding to the second PHY to be switched from a keepalive state to an operating state, wherein
the interface circuit is further configured to send, through the first PHY, the first indication code block to the receiving device.

53. An integrated circuit, wherein the integrated circuit comprises an interface circuit and a control circuit, and the interface circuit is coupled to the control circuit;
the interface circuit is configured to receive, through the second PHY, a first indication code block sent by a first PHY of a sending device, wherein the first indication code block indicates the second PHY to be switched from a sleep state to an operating state, and indicates a second serializer/deserializer SerDes corresponding to the second PHY to be switched from a keepalive state to an operating state; and
the control circuit is configured to switch, through the second PHY based on the first indication code block, the second PHY from the sleep state to the operating state, and the second SerDes corresponding to the second PHY from the keepalive state to the operating state.
